(19) Europäisches Patentamt
European Patent Office
Office européen des brevets

(11) Veröffentlichungsnummer: **0 004 026**
**B1**

(12) # EUROPÄISCHE PATENTSCHRIFT

(45) Veröffentlichungstag der Patentschrift: **05.05.82**

(51) Int. Cl.³: **C 07 F 9/48**, C 08 K 5/53, C 10 M 1/46, C 08 L 23/00

(21) Anmeldenummer: **79100591.1**

(22) Anmeldetag: **28.02.79**

(54) **Hydrolysestabile, ortho-alkylierte Phenylphosphonite und stabilisierte Massen.**

(30) Priorität: **02.03.78 US 882725**

(43) Veröffentlichungstag der Anmeldung: **19.09.79 Patentblatt 79/19**

(45) Bekanntmachung des Hinweises auf die Patenterteilung: **05.05.82 Patentblatt 82/18**

(84) Benannte Vertragsstaaten: **DE FR GB**

(56) Entgegenhaltungen:
**FR-A-2 140 112**
**GB-A-1 308 521**
**US-A-3 658 706**
**US-A-3 809 676**
**US-A-3 978 020**

**CHEMICAL ABSTRACTS, Vol. 81, 121856q (1974) Columbus, Ohio, USA.**
**T. SANKO. «Thermostable compositions containing organic phosphorus compounds.»**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Spivack, John D., 1 Blue Jay Street, Spring Valley New York 10977 (US)**

(74) Vertreter: **Zumstein sen., Fritz, Dr. et al, Bräuhausstrasse 4, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 004 026 B1**

# Hydrolysestabile, ortho-alkylierte Phenylphosphonite und stabilisierte Massen

Vorliegende Erfindung betrifft gehinderte ortho-alkylierte Phenylphosphonite, welche organische Materialien, insbesondere Kunststoffe, Polymere und Harze sowie mineralische und synthetische Flüssigkeiten und Öle wirksam stabilisieren.

Organische Polymermaterialien wie Kunststoffe und Harze sowie Schmier- und Mineralöl unterliegen thermischem, oxydativem Lichtabbau. Eine grosse Anzahl Stabilisatoren zur Stabilisierung verschiedener Substrate sind dem Stand der Technik bekannt. Deren Wirksamkeit ändert sich je nach den Ursachen des Abbaus und dem stabilisierten Substrat. Zahlreiche Stabilisatoren, die über längere Zeit hochwirksame Antioxydantien darstellen, sind bekanntlich verhältnismässig schlechte Stabilisatoren bei der Verarbeitung, wo eine Stabilisierung des Substrats gegen thermischen Abbau für kurze Zeit, aber bei verhältnismässig hoher Temperatur erforderlich ist. Viele Stabilisatoren sind mit den Substraten mehr oder weniger unverträglich, was während der Lebensdauer des Produkts Probleme stellt und die Wirksamkeit des Stabilisators verringert. Teilweise sind die Stabilisatoren entweder zu flüchtig oder thermisch oder hydrolytisch zu instabil, um als gewerbliche Stabilisatoren praktisch verwendbar zu sein.

In der japanischen Anmeldung 73/41 009 [CA, 81, 121 856g (1974)] werden ein ungehindertes Phenylphosphonit und ein ungehindertes Phenylthiophosphonit als Hitzestabilisatoren für ABS, PVC, Polyolefine und weitere polymere Substanzen offenbart.

Diphenylphosphonite, Diphenylen-bis-phosphonite und Terphenylen-bis-phosphonite sind in US-Patentschrift 3 825 629 als Stabilisatoren für organische Materialien beschrieben. Diese Verbindungen unterscheiden sich strukturell von den vorliegenden Verbindungen, insbesondere mit Bezug auf den Diphenyl- oder Terphenylanteil, der in diesen Molekülen direkt an das P-Atom gebunden ist.

Thermostabilisierte lineare Polyester, die geringe Mengen Diphenyl-phenylphosphonite enthalten, werden in US-Patentschrift 3 609 118 beansprucht. Diese Patentschrift enthält einen sehr breiten gattungsmässigen Hinweis auf Phenylphosphonite ohne Offenbarungen von Untergattungen und nur mit Diphenyl-phenylphosphonit als Beispiel.

In den US-Patentschriften 3 809 676 und 3 978 020 werden gattungsmässig einige Phosphonite bekanntgemacht, die denen der vorliegenden Erfindung verwandte Konstitutionen aufweisen, jedoch wird die spezifische Gattung der erfindungsgemässen Phosphonite weder als Beispiel angegeben noch speziell erwähnt. Diese Veröffentlichungen beziehen sich auf thermisch stabile, ein Phosphonit oder Phosphinit in Kombination mit einem Barium-, Calcium- oder Ceralkanoat oder -carbonat enthaltende, flammhemmende Polycarbonate bzw. auf thermisch stabile, ein Phosphonit und eine Epoxidverbindung enthaltende Polycarbonate.

Die vorliegenden Phosphonite sind als Stabilisatoren wirksamer als die nächstliegenden Phosphonite des Standes der Technik. Überraschenderweise zeigen sie auch eine weit überlegene Hydrolysestabilität gegenüber vielen vorbekannten Phosphoniten. Diese überlegene Hydrolysestabilität ermöglicht die Verwendung der vorliegenden Phosphonite in den unzähligen Fällen, wo Wasseraufnahme einen Nachteil darstellt und in der Praxis beim Endgebrauch der stabilisierten Produktmasse Probleme aufwirft. Ein Beispiel dafür sind Polyesterfasern, wo die Verwendung von hydrolysierenden und/oder hygroskopischen Stabilisatoren zu einer unerwünschten Quellung der Faser und begleitenden Mängeln führt.

Es wurde nun gefunden, dass die vorliegenden Phosphonite, vermutlich wegen der Art ihrer Konstitution, diese Mängel der Phosphonite des Standes der Technik beseitigen und daher eine ausgezeichnete Stabilisierungswirksamkeit mit Hydrolysestabilität kombinieren, ohne sekundäre, durch die Hydrolyse und/oder Wasseraufnahme der Phosphonitstabilisatoren des Standes der Technik bedingte Leistungsprobleme aufzuweisen. In der Tat besitzen die vorliegenden Verbindungen eine Kombination der erwünschten Eigenschaften, einschliesslich ausgezeichneter Stabilisierungswirksamkeit insbesondere bei hohen Temperaturen, und nicht nur zeigen sie keine Beeinträchtigung der Lichtstabilisierung, sondern weisen sogar lichtstabilisierende Eigenschaften sowie annehmbare Hydrolysestabilität und eine gute Farbe in stabilisierten Massen auf.

Gegenstand dieser Erfindung sind hydrolysestabile, ortho-alkylierte Phenylphosphonite sowie mit diesen Phosphoniten stabilisierte, sowohl polymere als auch nichtpolymere organische Materialien.

Mehr im einzelnen werden die erfindungsgemässen Phosphonite durch die Formel I

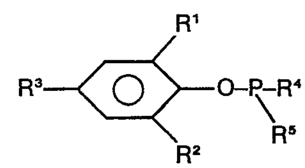

I

wiedergegeben, worin $R^1$ für verzweigtes Alkyl mit 3 bis 18 Kohlenstoffatomen, Benzyl, α-Methylbenzyl oder α,α-Dimethylbenzyl, $R^2$ für Alkyl mit 1 bis 18 Kohlenstoffatomen, Benzyl, α-Methylbenzyl oder α,α-Dimethylbenzyl, $R^3$ für Wasserstoff, Alkyl mit 1 bis 18 Kohlenstoffatomen, Carbalkoxy mit 2 bis 19 Kohlenstoffatomen, Carbalkoxyalkyl mit 3 bis 24 Kohlenstoffatomen, Carbophenoxy, Carbophenoxyalkyl mit 8 bis 16 Kohlenstoffatomen oder im Phenoxy durch Alkylgruppen mit 1 bis 8 Kohlenstoffatomen je Alkylgruppe 1fach bis 3fach substituiertes Carbophenoxy oder Carbophenoxyalkyl, $R^4$ für Alkyl mit 1 bis 18 Kohlenstoffatomen

oder gegebenenfalls durch Alkylgruppen mit je 1 bis 8 Kohlenstoffatomen 1fach bis 3fach substituiertes Phenyl, $R^5$ für Halogen, –XH oder –$XR^6$, X für O oder S, $R^6$ für alkyl-substituiertes Phenyl der Formel

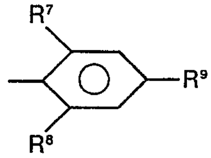

$R^7$ für Wasserstoff, verzweigtes Alkyl mit 3 bis 18 Kohlenstoffatomen, Benzyl, α-Methylbenzyl oder α,α-Dimethylbenzyl, $R^8$ für Wasserstoff, Alkyl mit 1 bis 18 Kohlenstoffatomen, Benzyl, α-Methylbenzyl oder α,α-Dimethylbenzyl und $R^9$ für Wasserstoff, Alkyl mit 1 bis 18 Kohlenstoffatomen, Carbalkoxy mit 2 bis 19 Kohlenstoffatomen, Carbalkoxyalkyl mit 3 bis 24 Kohlenstoffatomen, Carbophenoxy, Carbophenoxyalkyl mit 8 bis 16 Kohlenstoffatomen oder im Phenoxy durch Alkylgruppen mit 1 bis 8 Kohlenstoffatomen je Alkylgruppe 1fach bis 3fach substituiertes Carbophenoxy oder Carbophenoxyalkyl steht.

$R^1$ bedeutet verzweigtes Alkyl mit 3 bis 18 Kohlenstoffatomen wie Isopropyl, tert.-Butyl, sek.-Butyl, Isoamyl, tert.-Amyl, tert.-Octyl, tert.-Dodecyl oder tert.-Octadecyl. Vorzugsweise stellt $R^1$ verzweigtes Alkyl mit 4 bis 12 Kohlenstoffatomen wie tert.-Butyl, tert.-Amyl, tert.-Octyl oder tert.-Dodecyl oder auch α-Methylbenzyl oder α,α-Dimethylbenzyl dar. Besonders bevorzugt ist $R^1$ tertiäres Alkyl mit 4 bis 8 Kohlenstoffatomen wie tert.-Butyl oder tert.-Octyl.

$R^2$ bedeutet Alkyl mit 1 bis 18 Kohlenstoffatomen wie Methyl, Isopropyl, tert.-Butyl, n-Octyl, tert.-Octyl, n-Dodecyl oder Octadecyl. Vorzugsweise stellt $R^2$ Alkyl mit 3 bis 12 Kohlenstoffatomen, α-Methylbenzyl oder α,α-Dimethylbenzyl dar. Besonders bevorzugt ist $R^2$ verzweigtes Alkyl mit 4 bis 8 Kohlenstoffatomen wie tert.-Butyl, tert.-Amyl oder tert.-Octyl.

$R^3$ bedeutet Alkyl mit 1 bis 18 Kohlenstoffatomen wie Methyl, Butyl, Hexyl, Octyl, Nonyl, Dodecyl oder Octadecyl. Ferner bedeutet $R^3$ Carbalkoxy mit 2 bis 19 Kohlenstoffatomen wie Carbomethoxy, Carbäthoxy, Carboctoxy oder Carboctadecyloxy. $R^3$ kann auch Carbalkoxyalkyl mit 3 bis 24 Kohlenstoffatomen wie Carbomethoxymethyl, Carbomethoxyäthyl, Carbäthoxymethyl, Carbobutoxybutyl, Carboctoxymethyl, Carbododecyloxyäthyl oder Carboctadecyloxyhexyl bedeuten. Ebenfalls kann $R^3$ Carbophenoxy oder Carbophenoxyalkyl mit 8 bis 16 Kohlenstoffatomen wie Carbophenoxymethyl, Carbophenoxyäthyl oder Carbophenoxynonyl sein. Die Phenoxygruppen von Carbophenoxy oder Carbophenoxyalkyl können auch durch Alkylgruppen mit 1 bis 8 Kohlenstoffatomen je Alkylgruppe 1fach bis 3fach substituiert sein. Derartige substituierte Phenoxygruppen würden p-Tolyloxy, p-tert.-Butylphenoxy, 2,4-Di-tert.-butylphenoxy, Mesityloxy, 2,4,6-Tri-tert.-butylphenoxy oder p-tert.-Octylphenoxy umfassen.

Vorzugsweise stellt $R^3$ Wasserstoff, Alkyl mit 1 bis 18 Kohlenstoffatomen, Carbalkoxy mit 2 bis 19 Kohlenstoffatomen, Carbalkoxyalkyl mit 3 bis 21 Kohlenstoffatomen oder im Phenoxy durch Alkylgruppen mit 1 bis 8 Kohlenstoffatomen je Alkylgruppe 1fach bis 3fach substituiertes Carbophenoxy dar.

Besonders bevorzugt ist $R^3$ Wasserstoff, Alkyl mit 1 bis 9 Kohlenstoffatomen, Carbalkoxy mit 2 bis 9 Kohlenstoffatomen, Carbalkoxyalkyl mit 3 bis 11 Kohlenstoffatomen oder im Phenoxy durch Alkylgruppen mit 1 bis 4 Kohlenstoffatomen je Alkylgruppe 1fach bis 3fach substituiertes Carbophenoxy.

$R^4$ bedeutet Alkyl mit 1 bis 18 Kohlenstoffatomen wie Methyl, Äthyl, Butyl, Octyl, Dodecyl, Hexadecyl oder Octadecyl. Ferner kann $R^4$ gegebenenfalls durch Alkylgruppen mit je 1 bis 8 Kohlenstoffatomen 1fach bis 3fach substituiertes Phenyl darstellen. Derartige substituierte Phenyle würden o-Tolyl, m-Tolyl, p-Tolyl, o-Xylyl, m-Xylyl, p-Xylyl, Mesityl, o-Cumyl, p-tert.-Butylphenyl, 2,4,6-Tri-tert.-butylphenyl oder 2,4,6-Tri-tert.-Octylphenyl umfassen.

Vorzugsweise stellt $R^4$ Alkyl mit 1 bis 18 Kohlenstoffatomen oder gegebenenfalls durch Alkylgruppen mit 1 bis 8 Kohlenstoffatomen je Alkylgruppe 1fach bis 3fach substituiertes Phenyl dar.

Besonders bevorzugt ist $R^4$ durch Alkylgruppen mit 1 bis 4 Kohlenstoffatomen je Alkylgruppe 1fach bis 3fach substituiertes Phenyl.

$R^5$ bedeutet Halogen wie Chlor oder Brom, vorzugsweise Chlor, oder –XH oder –$XR^6$.

Vorzugsweise stellt $R^5$ Chlor oder –$XR^6$ dar.

X bedeutet O oder S, vorzugsweise O.

$R^7$ bedeutet Wasserstoff oder hat die oben für $R^1$ angegebene Bedeutung. Vorzugsweise stellt $R^7$ Wasserstoff, verzweigtes Alkyl mit 4 bis 12 Kohlenstoffatomen, α-Methylbenzyl oder α,α-Dimethylbenzyl dar. Besonders bevorzugt ist $R^7$ tertiäres Alkyl mit 4 bis 8 Kohlenstoffatomen.

$R^8$ bedeutet Wasserstoff oder hat die oben für $R^2$ angegebene Bedeutung. Vorzugsweise stellt $R^8$ Wasserstoff, Alkyl mit 1 bis 12 Kohlenstoffatomen, α-Methylbenzyl oder α,α-Dimethylbenzyl dar. Besonders bevorzugt ist $R^8$ Wasserstoff oder Alkyl mit 1 bis 8 Kohlenstoffatomen.

$R^9$ bedeutet Wasserstoff oder hat die oben für $R^3$ angegebene Bedeutung. Vorzugsweise stellt $R^9$ Wasserstoff, Alkyl mit 1 bis 18 Kohlenstoffatomen, Carbalkoxy mit 2 bis 19 Kohlenstoffatomen, Carbalkoxyalkyl mit 3 bis 21 Kohlenstoffatomen oder im Phenoxy durch Alkylgruppen mit 1 bis 8 Kohlenstoffatomen je Alkylgruppe 1fach bis 3fach substituiertes Carbophenoxy dar.

Besonders bevorzugt ist $R^9$ Wasserstoff, Alkyl mit 1 bis 9 Kohlenstoffatomen, Carbalkoxy mit 2 bis 9 Kohlenstoffatomen, Carbalkoxyalkyl mit 3 bis 11 Kohlenstoffatomen oder im Phenoxy durch Alkylgruppen mit 1 bis 4 Kohlenstoffatomen je Alkylgruppe 1fach bis 3fach substituiertes Carbophenoxy.

Es versteht sich, dass vorzugsweise $R^7$, $R^8$ und $R^9$ nicht alle gleichzeitig Wasserstoff sein können.

Besonders bevorzugte Ausbildungsformen der vorliegenden Phosphonite sind solche, worin

$R^1$ für Isopropyl oder tert.-Butyl, $R^2$ für Alkyl mit 1 bis 4 Kohlenstoffatomen, $R^3$ für Wasserstoff, Alkyl mit 1 bis 18 Kohlenstoffatomen, $-CH_2CH_2COOCH_3$, $-COOCH_3$, $-COOC_{18}H_{37}$ oder

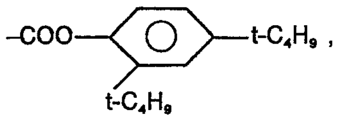

$R^4$ für Alkyl mit 1 bis 18 Kohlenstoffatomen oder Phenyl, $R^5$ für Chlor, XH oder $XR^6$, X für O, $R^6$ für

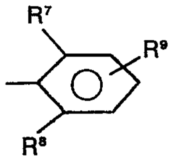

$R^7$ für Wasserstoff, Isopropyl oder tert.-Butyl, $R^8$ für Wasserstoff oder Alkyl mit 1 bis 4 Kohlenstoffatomen und $R^9$ für Alkyl mit 1 bis 4 Kohlenstoffatomen, $-COOCH_3$, $-CH_2CH_2COOCH_3$ oder

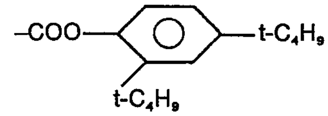

steht, mit der Massgabe, dass $R^7$ und $R^8$ nicht beide gleichzeitig Wasserstoff sein können.

Synthese der Verbindungen:

Die erfindungsgemässen Verbindungen werden auf folgende Weise hergestellt:

1.

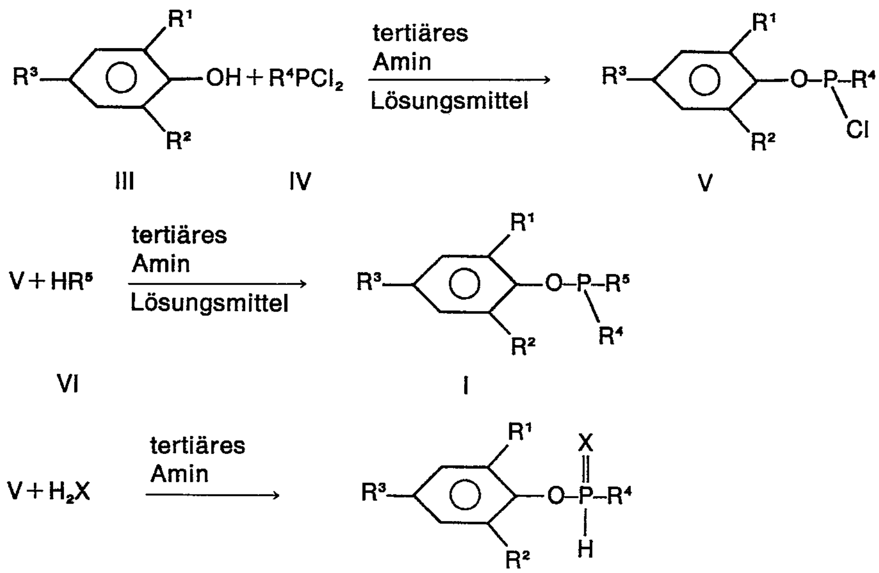


III IV V

2.

VI I

3.

VII

Die Verwendung von tertiären Aminen lässt sich vermeiden, wenn man die Phenole (bzw. Thiophenole) der Formel III oder VI in einer oder beiden Stufen (1, 2) der Synthese durch Umsetzung mit stöchiometrischen Mengen Alkalimetall oder Alkalihydroxyd in das Phenolatanion (bzw. Thiophenolatanion) umwandelt und anschliessend das Anion entsprechend mit IV oder V umsetzt.

Aromatische Kohlenwasserstoffe wie Benzol, Toluol oder Xylol sind als Lösungsmittel für die Synthese geeignet, jedoch nicht unumgänglich.

Die Reaktionsstufen lassen sich zweckmässig unter Verwendung tertiärer Amine wie Triäthylamin, Pyridin, N,N-dimethylanilin durchführen, jedoch ist deren Verwendung wiederum nicht unumgänglich.

Die Anwendung überschüssigen tertiären Amins über die als Protonakzeptor erforderliche Menge erhöht die Reaktionsgeschwindigkeit in den Synthesestufen erheblich. Dies ist besonders wichtig, wenn III und VI stark gehinderte Phenole sind.

Die Reaktionstemperaturen können von unterhalb Raumtemperatur bis zur Rückflusstemperatur des vorhandenen Lösungsmittels schwanken. Wird kein Lösungsmittel verwendet, so sind Temperaturen bis etwa 200°C zweckmässig.

Die Zwischenverbindung V kann zwar isoliert werden, aber die gesamte Synthese für I kann ohne Isolierung des Zwischenprodukts ausgeführt werden.

Bei einer weiteren Arbeitsweise zur Synthese der vorliegenden Verbindungen handelt es sich um eine umgekehrte Reaktionsfolge, nach der neuartige wertvolle Zwischenprodukte IX wie unten dargelegt hergestellt werden:

1.

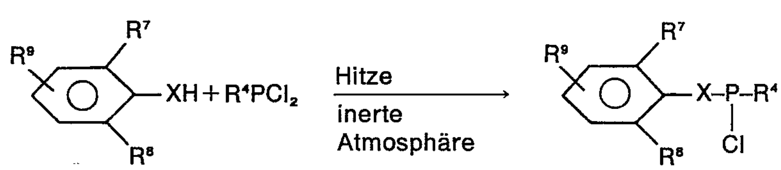


VIII IV IX

2.

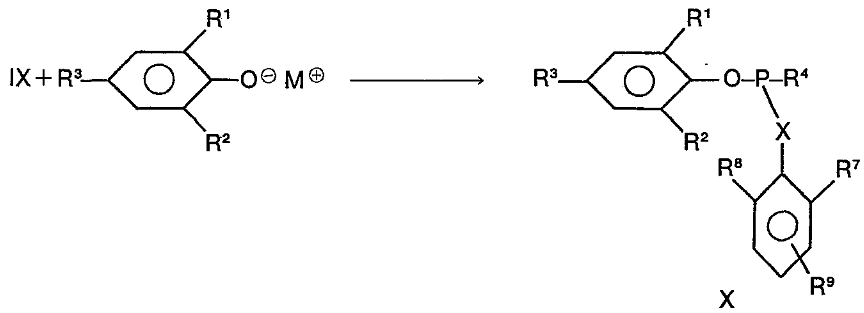

Die Bedeutungen von $R^1$, $R^2$, $R^3$, $R^4$, $R^7$, $R^8$ und $R^9$ sind wie weiter oben angegeben. Das Zwischenprodukt IX unterscheidet sich von dem Zwischenprodukt V, indem in der Verbindung IX $R^7$ und $R^8$ auch Wasserstoff sein können.

Die verschiedenen Ausgangsstoffe, d.h. Phenole, Thiophenole und Chlorphosphine, sind grösstenteils als Handelsobjekte erhältlich oder können leicht nach bekannten Methoden hergestellt werden.

Die erfindungsgemässen Verbindungen sind wirksame Lichtschutzmittel und/oder Antioxydantien für eine lange Reihe organischer Polymerer. Polymere, die stabilisiert werden können, schliessen ein:

1. Sich von Mono- oder Diolefinen ableitende Polymere, z.B. gegebenenfalls vernetztes Polyäthylen sowie Polypropylen, Polyisobutylen, Polymethylbuten-1, Polymethylpenten-1, Polyisopren und Polybutadien.

2. Gemische der unter 1 angegebenen Homopolymeren, beispielsweise Gemische aus Polypropylen und Polyäthylen, Polypropylen und Polybuten-1 sowie Polypropylen und Polyisobutylen.

3. Copolymere der Monomeren, auf denen die unter 1 angegebenen Homopolymeren basieren, beispielsweise Äthylen/Propylencopolymere, Propylen/Buten-1-copolymere, Propylen/Isobutylencopolymere, Äthylen/Buten-1-copolymere sowie Terpolymere aus Äthylen und Propylen mit einem Dien, zum Beispiel Hexadien, Dicyclopentadien oder Äthylidennorbornen, und Copolymere aus α-Olefinen, z.B. Äthylen mit Acryl- oder Methacrylsäure.

4. Polystyrol.

5. Copolymere von Styrol und α-Methylstyrol, beispielsweise Styrol/Butadiencopolymere, Styrol/Acrylnitrilcopolymere, Styrol/Acrylnitril/Methacrylatcopolymere, mit Acrylesterpolymeren zwecks Schlagzähigkeit modifizierte Styrol/Acrylnitrilcopolymere sowie Blockcopolymere, z.B. Styrol/Butadien/Styrolblockcopolymere.

6. Pfropfcopolymere von Styrol, beispielsweise das Pfropfpolymer von Styrol auf Polybutadien, das Pfropfpolymer von Styrol mit Acrylnitril auf Polybutadien sowie deren Gemische mit den unter 5 angegebenen, allgemein als Acrylnitril/Butadien/Styrol oder ABS-Kunststoffe bezeichneten Copolymeren.

7. Halogenhaltige Vinylpolymere, beispielsweise Polyvinylchlorid, Polyvinylidenchlorid, Polyvinylfluorid, Polychloropren, chlorierte Kautschuke, Vinylchlorid/Vinylidenchloridcopolymere, Vinylchlorid/Vinylacetatcopolymere und Vinylidenchlorid/Vinylacetatcopolymere.

8. Sich von α,β-ungesättigten Säuren und deren Derivaten ableitende Polymere, Polyacrylate und Polymethacrylate, Polyacrylamide und Polyacrylnitril.

9. Sich von ungesättigten Alkoholen und Aminen und deren Acylderivaten oder Acetalen ableitende Polymere, beispielsweise Polyvinylalkohol, Polyvinylacetat, Polyvinylstearat, Polyvinylbenzoat, Polyvinylmaleinat, Polyvinylbutyral, Polyallylphthalat, Polyallylmelamin sowie deren Copolymere mit anderen Vinylverbindungen, zum Beispiel Äthylen/Vinylacetatcopolymere.

10. Sich von Epoxiden ableitende Homopolymere und Copolymere, beispielsweise Polyäthylenoxyd oder die sich von Bis-glycidyläthern ableitenden Polymeren.

11. Polyacetale, beispielsweise Polyoxymethylen sowie solche Polyoxymethylene, die als Comonomer Äthylenoxyd enthalten.

12. Polyalkylenoxyde, beispielsweise Polyoxyäthylen, Polypropylenoxyd oder Polyisobutylenoxyd.

13. Polyphenylenoxyde.

14. Polyurethane und Polyharnstoffe.

15. Polycarbonate.

16. Polysulfone.

17. Sich von Diaminen und Dicarbonsäuren und/oder Aminocarbonsäuren oder den entsprechenden Lactamen ableitende Polyamide und Copolyamide, beispielsweise Polyamid-6, Polyamid-6/6, Polyamid-6/10, Polyamid-11, Polyamid-12 und Poly-m-phenylen-isophthalamid.

18. Sich von Dicarbonsäuren und Dialkoholen und/oder von Hydroxycarbonsäuren oder den entsprechenden Lactonen ableitende Polyester, beispielsweise Polyäthylenglycolterephthalat und Poly-1,4-dimethylol-cyclohexanterephthalat.

19. Sich einerseits von Aldehyden und anderseits von Phenolen, Harnstoffen und Melamin ableitende vernetzte Polymere, beispielsweise Phenol/Formaldehyd-, Harnstoff/Formaldehyd- und Melamin/Formaldehydharze.

20. Alkydharze, beispielsweise Glycerin/Phthalsäureharze und deren Gemische mit Melamin/Formaldehydharzen.

21. Sich von Copolyestern gesättigter und ungesättigter Dicarbonsäuren mit mehrwertigen Alkoholen sowie Vinylverbindungen als Vernetzungsmittel ableitende ungesättigte Polyesterharze sowie deren halogenhaltige, flammwidrige Modifikationen.

22. Natürlich vorkommende Polymere, beispielsweise Cellulose, Kautschuk sowie deren chemischmodifizierte homologe Derivate, zum Beispiel Celluloseacetate, Cellulosepropionate und Cellulosebutyrate sowie Celluloseäther, z.B. Methylcellulose.

Besonders wirksam sind die erfindungsgemässen Verbindungen bei der Stabilisierung organischer Materialien wie Kunststoffe, Polymere und Harze, sowie mineralischer und synthetischer Flüssigkeiten wie Schmierölen, Umlaufölen und dergleichen.

Die erfindungsgemässen Verbindungen sind besonders als Stabilisatoren nützlich, speziell zum Schutz von Polyolefinen, beispielsweise Polyäthylen, Polypropylen, Polyisobutylen, Polybuten-1, Polypenten-1, Poly-3-methylbuten-1, Poly-4-methylpenten-1, sowie verschiedene Äthylen/Propylencopolymere und dergleichen.

Weitere Substrate, in denen die erfindungsgemässen Verbindungen besonders nützlich sind, umfassen Polystyrol einschliesslich schlagzähem Polystyrol, ABS-Harz, SBR, Polyisopren sowie Naturkautschuk, Polyester einschliesslich Polyäthylenterephthalat und Polybutylenterephthalat einschliesslich Copolymere. Ebenfalls werden Polyurethane, Polycarbonate, Polyamide wie Nylon-6,6/6 und dergleichen sowie Copolyamide und Polysulfone stabilisiert.

Die erfindungsgemässen Verbindungen können für sich als einziger Stabilisator angewandt werden, der entweder hauptsächlich als Antioxydans oder als Lichtstabilisator funktioniert oder diese beiden Funktionen in sich vereint. Die Stabilisatoren können zusammen mit phenolischen Antioxydantien, Gleitmitteln wie Kalziumstearat, Pigmenten, Färbemitteln oder Farbstoffen, UV-Absorptionsmitteln, Lichtstabilisatoren wie gehinderten Aminen, Metalldesaktivatoren, Talkum und anderen Füllstoffen und dergleichen verwendet werden.

Im allgemeinen werden die erfindungsgemässen Stabilisatoren in Mengen von etwa 0,01 bis etwa 5 Gew.-% der stabilisierten Masse eingesetzt, doch wird dies nach dem Substrat und der Anwendung jeweils variieren. Ein vorteilhafter Bereich liegt bei etwa 0,05 bis etwa 2% und insbesondere bei 0,1 bis etwa 1%.

Erfindungsgemässe Verbindungen stabilisieren Polymere, insbesondere während der Verarbeitung bei hoher Temperatur und geben verhältnismässig geringe Farbänderung, obwohl das Polymer mehrere Extrusionen durchlaufen kann. Polymere, bei denen diese Eigenschaft besonders ausgesprochen ist, sind Polypropylen, Polyäthylen, Styrolkörper wie ABS, Polyäthylen- und Polybutylenterephthalate, Polycarbonate, Naturkautschuk und Synthesekautschuk wie SBR. Während zahlreiche Verbindungen, die als Verarbeitungsstabilisatoren verwendet wurden, nur in Gegenwart von phenolischen Antioxydantien usw. als Verarbeitungsstabilisatoren für Polyolefine wirksam sind, sind erfindungsgemässe Verbindungen in Abwesenheit phenolischer Antioxydantien wirksam.

Bei zahlreichen erfindungsgemässen Verbindungen sind die verfahrensstabilisierenden Eigenschaften mit der Fähigkeit kombiniert, dem Polymer Lichtstabilität zu verleihen. Dies ist besonders bei Polymerfasern wichtig, wo die Verarbeitungstemperaturen am höchsten liegen und die Stabilität gegen aktinisches Licht ein überragendes Erfordernis darstellt. Eine besonders wichtige Eigenschaft bei Stabilisatoren, welche dreiwertige Phosphorester darstellen, besteht darin, dass sie nichthygroskopisch und in Gegenwart von Luftfeuchtigkeit während der Lagerung unter Umgebungsbedingungen hydrolysefest sind. Die Hygroskopizität erschwert häufig die gleichförmige Einarbeitung des Verfahrensstabilisators in das Polymer, was Klebrigkeit und Stauung verursacht, während eine Hydrolyse der Phosphoresterstabilisatoren bei der Lagerung häufig zu Verbindungen führt, die weniger wirksam sind.

Die Stabilisatoren der Formel I lassen sich leicht nach herkömmlichen Methoden in die organischen Polymere einarbeiten, und zwar während irgendeiner zweckmässigen Stufe vor der Fertigung von Formkörpern. Beispielsweise kann man den Stabilisator mit dem Polymer als trockenes Pulver vermischen oder eine Suspension oder Emulsion des Stabilisators mit einer Lösung, Suspension oder Emulsion des Polymeren vermischen. Gegebenenfalls können die erfindungsgemässen stabilisierten Polymermassen auch verschiedene herkömmliche Zusatzstoffe wie die folgenden enthalten:

1. Antioxydantien

1.1 Einfache 2,6-Dialkylphenole, wie beispielsweise
2,6-Di-tert.-butyl-4-methylphenol,
2-tert.-Butyl-4,6-di-methylphenol,
2,6-Di-tert.-butyl-4-methoxymethylphenol und
2,6-Dioctadecyl-4-methylphenol.

1.2 Derivate von alkylierten Hydrochinonen, wie beispielsweise
2,5-Di-tert.-butyl-hydrochinon,
2,5-Di-tert.-amylhydrochinon,
2,6-Di-tert.-butyl-hydrochinon,
2,5-Di-tert.-butyl-4-hydroxy-anisol,
3,5-Di-tert.-butyl-4-hydroxy-anisol,
Tris-(3,5-di-tert.-butyl-4-hydroxyphenyl)-phosphit,
3,5-Di-tert.-butyl-4-hydroxyphenylstearat und
Bis-(3,5-di-tert.-butyl-4-hydroxyphenyl)-adipat.

1.3 Hydroxylierte Thiodiphenyläther, wie beispielsweise
2,2′-Thio-bis-(6-tert.-butyl-4-methylphenol),
2,2′-Thio-bis-(4-octylphenol),
4,4′-Thio-bis-(6-tert.-butyl-3-methylphenol),
4,4′-Thio-bis-(3,6-di-sek.-amylphenol),
4,4′-Thio-bis-(6-tert.-butyl-2-methylphenol) und
4,4′-Bis-(2,6-dimethyl-4-hydroxy-phenyl)-disulfid.

1.4 Alkyliden-bisphenole, wie beispielsweise
2,2′-Methylen-bis-(6-tert.-butyl-4-methylphenol),
2,2′-Methylen-bis-(6-tert.-butyl-4-äthylphenol),

4,4'-Methylen-bis-(6-tert.-butyl-2-methylphenol), 4,4'-Methylen-bis-(2,6-di-tert.-butylphenol), 2,6-Di-(3-tert.-butyl-5-methyl-2-hydroxybenzyl)-4-methylphenol, 2,2'-Methylen-bis-[4-methyl-6-(α-methylcyclohexyl)-phenol], 1,1-Bis-(3,5-di-methyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan und Äthylenglykol-bis-[3,3-bis-(3-tert.-butyl-4-hydroxyphenyl)-butyrat].

1.5 O-, N- und S-Benzylverbindungen, wie beispielsweise 3,5,3',5'-Tetra-tert.-butyl-4,4'-dihydroxydibenzyläther, Octadecyl-4-hydroxy-3,5-dimethylbenzylmercaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6 Hydroxybenzylierte Malonate, wie beispielsweise Di-octadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercapto-äthyl-2,2-bis-(3,5-di-tert.-butyl-4-hydroxybenzyl)-malonat und Di-[4-(1,1,3,3-tetramethylbutyl)-phenyl]-2,2-bis-(3,5-di-tert.-butyl-4-hydroxybenzyl)-malonat.

1.7 Hydroxybenzyl-aromatische Verbindungen, wie beispielsweise 1,3,5-Tri-(3,5-di-tert.-butyl-4-hydroxybenzyl)-2,4,6-trimethylbenzol, 1,4-Di-(3,5-di-tert.-butyl-4-hydroxybenzyl)-2,3,5,6-tetramethylbenzol und 2,4,6-Tri-(3,5-di-tert.-butyl-4-hydroxybenzyl)-phenol.

1.8 s-Triazinverbindungen, wie beispielsweise 2,4-Bis-octylmercapto-6-(3,5-di-tert.-butyl-4-hydroxy-anilino)-s-triazin, 2-Octylmercapto-4,6-bis-(3,5-di-tert.-butyl-4-hydroxy-anilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9 Amide der β-(3,5-Di-tert.-butyl-4-hydroxyphenyl)-propionsäure, wie beispielsweise 1,3,5-Tris-(3,5-di-tert.-butyl-4-hydroxyphenylpropionyl)-hexahydro-s-triazin und N,N'-Di-(3,5-di-tert.-butyl-4-hydroxyphenylpropionyl)-hexamethylendiamin und N,N'-Bis-β-(3,5-di-t-butyl-4-hydroxyphenyl)-propionylhydrazin.

1.10 Ester der β-(3,5-Di-tert.-butyl-4-hydroxyphenyl)-propionsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan.

1.11 Ester der β-(5-tert.-Butyl-4-hydroxy-3-methylphenyl)-propionsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan.

1.12 Ester der 3,5-Di-tert.-butyl-4-hydroxyphenyl-essigsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan, insbesondere der Tetrakisester des Pentaerythrits.

1.13 Benzylphosphonate, wie beispielsweise Dimethyl-3,5-di-tert.-butyl-4-hydroxybenzylphosphonat, Diäthyl-3,5-di-tert.-butyl-4-hydroxybenzylphosphonat, Dioctadecyl-3,5-di-tert.-butyl-4-hydroxybenzylphosphonat und Dioctadecyl-5-tert.-butyl-4-hydroxy-3-methylbenzyl-phosphonat.

Die folgenden seien als Beispiele für weitere Zusatzstoffe genannt, die zusammen mit dem erfindungsgemässen Stabilisator und dem Antioxydans verwendet werden können:

1. Aminoarylderivate, z.B. Phenyl-1-naphthylamin, Phenyl-2-naphthylamin, N,N'-Diphenyl-p-phenylendiamin, N,N'-Di-2-naphthyl-p-phenylendiamin, N,N'-Di-sek.-butyl-p-phenylendiamin,

6-Äthoxy-2,2,4-trimethyl-1,2-dihydrochinolin,
6-Dodecyl-2,2,4-trimethyl-1,2-dihydrochinolin,
Mono- und Dioctyliminodibenzyl und
polymerisiertes 2,2,4-Trimethyl-1,2-dihydrochinolin.
Octyliertes Diphenylamin, nonyliertes Diphenylamin,
N-Phenyl-N'-cyclohexyl-p-phenylendiamin,
N-Phenyl-N'-isopropyl-p-phenylendiamin,
N,N'-Di-sek.-octyl-p-phenylendiamin,
N-Phenyl-N'-sek.-octyl-p-phenylendiamin,
N,N'-Di-(1,4-dimethylpentyl)-p-phenylendiamin,
N,N'-Dimethyl-N,N'-di-(sek.-octyl)-p-phenylendiamin,
2,6-Dimethyl-4-methoxyanilin,
4-Äthoxy-N-sek.-butylanilin,
das Diphenylamin/Acetonkondensationsprodukt,
Aldol-1-naphthylamin und Phenothiazin.

Bei der Verwendung der obigen Antioxydantien sind Verfärbungseffekte zu berücksichtigen.

2. UV-Absorber und Lichtstabilisiermittel
2.1 2-(2'-Hydroxyphenyl)-benztriazole, z.B. das 5'-Methyl-, 3',5'-Di-tert.-butyl-, 5'-tert.-Butyl-, 5'-(1,1,3,3-Tetramethylbutyl)-, 5-Chlor-3', 5'-di-tert.-butyl, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl- und 5-Chlor-3',5'-di-tert.-amyl-derivat.

2.2 2,4-Bis-(2'-hydroxyphenyl)-6-alkyl-s-triazine, z.B.
das 6-Äthyl-, 6-Heptadecyl- oder 6-Undecyl-derivat.

2.3 2-Hydroxybenzophenone, z.B. das 4-Hydroxy-, 4-Methoxy-, 4-Octoxy-, 4-Decyloxy-, 4-Dodecyloxy-, 4-Benzyloxy-, 4,2',4'-Trihydroxy- oder 2'-Hydroxy-4,4'-dimethoxy-derivat.

2.4 1,3-Bis-(2'-hydroxybenzoyl)-benzole, z.B.
1,3-Bis-(2'-hydroxy-4'-hexyloxy-benzoyl)-benzol,
1,3-Bis-(2'-hydroxy-4'-octyloxy-benzoyl)-benzol oder
1,3-Bis-(2'-hydroxy-4'-dodecyloxy-benzoyl)-benzol.

2.5 Ester gegebenenfalls substituierter Benzoesäure, z.B.
Phenylsalicylat, Octylphenylsalicylat,
Dibenzoylresorcin,
Bis-(4-tert.-butylbenzoyl)-resorcin,
Benzoylresorcin,
3,5-Di-tert.-butyl-4-hydroxybenzoesäure-2,4-di-tert.-butylphenylester oder
-octadecylester oder -2-methyl-4,6-di-tert.-butylester.

2.6 Acrylate, z.B.
α-Cyan-β,β-diphenylacrylsäureäthylester oder -isooctylester,
α-Carbomethoxy-zimtsäuremethylester,
α-Cyan-β-methyl-p-methoxy-zimtsäuremethylester oder -butylester oder
N-(β-Carbomethoxyvinyl)-2-methyl-indolin.

2.7 Sterisch gehinderte Amine, z.B.
4-Benzoyl-2,2,6,6-tetramethylpiperidin,
4-Stearyloxy-2,2,6,6-tetramethylpiperidin,
Bis-(2,2,6,6-tetramethylpiperidyl)-sebacin oder
3-n-Octyl-7,7,9,9-tetramethyl-1,3,8-triazaspiro[4,5]decan-2,4-dion.

2.8 Oxalicsäurediamide, z.B.
4,4'-Di-octyloxy-oxanilid,
2,2'-Di-octyloxy-5,5'-di-tert.-butyl-oxanilid,
2,2'-Didodecyloxy-5,5'-di-tert.-butyl-oxanilid,
2-Äthoxy-2'-äthyl-oxanilid,
N,N'-Bis-(3-dimethylaminopropyl)-oxalamid,
2-Äthoxy-5-tert.-butyl-2'-äthyl-oxanilid
und dessen Gemisch mit
2-Äthoxy-2'-äthyl-5,4'-di-tert.-butyl-oxanilid
oder Gemische von ortho- und para-methoxy- sowie o- und p-äthoxy-disubstituierten Oxaniliden.

3. Metalldesaktivatoren, z.B.
Oxanilid, Isophthalsäuredihydrazid,
Sebacinsäure-bis-phenylhydrazid,
Bis-benzyliden-oxalsäure-dihydrazid,
N,N'-Diacetal-adipinsäure-dihydrazid,
N,N'-Bis-salicyloyl-oxalsäure-dihydrazid,
N,N'-Bis-salicyloyl-hydrazin,
N,N'-Bis-(3,5-di-tert.-butyl-4-hydroxyphenylpropionyl)-hydrazin,
N-Salicyloyl-N'-salicylalhydrazin,
3-Salicyloyl-amino-1,2,4-triazol oder
N,N'-Bis-salicyloyl-thiopropionsäure-dihydrazid.

4. Basische Co-Stabilisatoren, z.B.
Alkalisalze und Erdalkalisalze höherer Fettsäuren, beispielsweise Ca-stearat, Zn-stearat, Mg-behenat, Na-ricinoleat oder K-palmitat.

5. Keimbildungsmittel, z.B.
4-tert.-Butylbenzoesäure, Adipinsäure oder Diphenylessigsäure.

6. Phosphite, wie beispielsweise
Triphenylphosphit, Diphenylalkylphosphite, Phenyldialkylphosphite, Tri-(nonylphenyl)-phosphit, Trilaurylphosphit, Trioctadecylphosphit, 3,9-Isodecyloxy-2,4,8,10-tetraoxa-3,9-diphosphaspiro[5,5]undecan und Tri-(4-hydroxy-3,5-di-tert.-butyl-phenyl)-phosphit.

Als weitere Zusatzstoffe, die in die stabilisierten Massen eingearbeitet werden können, kommen Thiosynergisten wie Dilauryl-thiodipropionat oder Distearyl-thio-dipropionat, Gleitmittel wie Stearylalkohol, Füllstoffe, Russ, Asbest, Kaolin, Talkum, Glasfasern, Pigmente, optische Aufheller, Flammschutzmittel und Antistatika in Frage.

Die nachfolgenden Beispiele sind lediglich für Erläuterungszwecke angegeben und sollen in gar keiner Weise die Art und den Rahmen der vorliegenden Erfindung einschränken.

Beispiel 1

O-(2,6-Di-tert.-butyl-4-methylphenyl)-phenylphosphonochloridit

Man versetzt eine Lösung von 110 g 2,6-Di-tert.-butyl-p-kresol in 252 g Triäthylamin im Verlauf von 15 Minuten bei 25–26°C mit 89,5 g Dichlorphenylphosphin. Man erhitzt 31 Stunden auf 95–97°C. Dann wird überschüssiges Triäthylaminlösungsmittel durch Vakuumdestillation entfernt, der so erhaltene Rückstand mit 200 ml trockenem Benzol angerieben und das weisse kristalline feste Triäthylaminhydrochlorid durch Filtrieren abgetrennt. Das oben genannte erwünschte Produkt wird aus dem Filtrat durch Vakuumdestillation des Benzols und Kristallisation des Rückstands aus Acetonitril gewonnen. Man erhält das Produkt als weisse, bei 103–106°C schmelzende Kristalle.

Beispiel 2

O-(2,6-Di-tert.-butyl-4-methylphenyl)-O′-(2,4-di-tert.-butylphenyl)-phenylphosphonit

Man löst 8,24 g 2,4-Di-tert.-butylphenol in 250 ml Toluol. Man versetzt mit 4,85 g 46,3%iger wässriger Kalilauge. Die so erhaltene Dispersion wird etwa 5,3 Stunden unter Rückfluss erhitzt, bis sich 3,25 g Wasser durch azeotrope Destillation angesammelt haben, wobei sich Kalium-2,4-di-tert.-butylphenolat als weisse Dispersion in Toluol bildet.

Man tropft eine Lösung von 14,48 g des in Beispiel 1 hergestellten Produkts in 40 ml Toluol im Verlauf von 10 Minuten bei 10 bis 15°C zur obigen Dispersion. Das Gemisch wird über Nacht bei Raumtemperatur gerührt.

Dann klärt man das trübe Gemisch durch Filtrieren und engt das Filtrat im Vakuum ein. Der erhaltene Rückstand wird mit Acetonitril/Toluol angerieben, was das oben genannte Produkt als weisse, bei 125–128°C schmelzende Kristalle ergibt.

Beispiel 3

O-(2,4,6-Tri-tert.-butylphenyl)-phenyl-phosphonochloridit

Gemäss der Arbeitsweise des Beispiels 2 und ausgehend von 21,6 g 2,4,6-Tri-tert.-butylphenol, 9,7 g 46,3%iger wässriger Kalilauge und 250 ml Toluol stellt man eine Dispersion von Kalium-2,4,6-tri-tert.-butylphenolat her.

Die obige Dispersion wird auf 10°C abgekühlt und im Verlauf von 7 Minuten bei 10 bis 15°C tropfenweise mit 14,8 g Dichlorphenylphosphin versetzt. Man rührt 19 Stunden und trennt das gebildete Kaliumchlorid durch Filtrieren ab. Nach Entfernung des Toluols durch Vakuumdestillation gewinnt man das Rohprodukt als Rückstand. Nach Anreiben des Rohprodukts mit Acetonitril und nachfolgender Umkristallisation isoliert man die oben genannte Verbindung als weisse, bei 97–99°C schmelzende Kristalle.

Beispiel 4

O-(2,4-Di-tert.-butylphenyl)-O′-(2,4,6-tri-tert.-butylphenyl)-phenylphosphonit

Das oben genannte Produkt wird gemäss der allgemeinen Methode des Beispiels 2 unter Ersatz des Produkts aus Beispiel 1 durch eine äquivalente Menge des Produkts aus Beispiel 3 hergestellt. Man isoliert das gewünschte Produkt als weisse, bei 120–123°C schmelzende Kristalle.

Beispiel 5

O-(2,6-Di-tert.-butyl-4-methylphenyl)-O′-(2,6-di-tert.-butyl-4-carbomethoxyphenyl)-phenylphosphonit

Man gibt die Lösung von 21,7 g der Verbindung aus Beispiel 1 in 50 ml Toluol im Verlauf von 8 Minuten bei 20–25°C zu einer Lösung von Methyl-3,5-di-tert.-butyl-4-hydroxybenzoat in 60 ml Triäthylamin. Nach 7 Stunden Erhitzen auf 80–85°C und weiteren 7 Stunden bei Rückfluss setzt man 15 ml N,N-Dimethylformamid dazu, um die Reaktion zu beschleunigen. Man erhitzt noch weitere 7 Stunden bei 106–108°C. Die vorhandenen flüchtigen Stoffe werden dann durch Vakuumdestillation entfernt, und der gebildete Rückstand durch Zusatz von 100 ml Toluol und nachfolgendes Filtrieren vom Triäthylaminhydrochlorid befreit. Das Filtrat wäscht man nacheinander mit Wasser, gesättigtem wässrigem Natriumbicarbonat und Wasser. Nach Trocknen über wasserfreiem Natriumsulfat wird dann das Toluol entfernt und der isolierte Rückstand aus einem Gemisch aus Acetonitril und Isopropanol kristallisiert, wobei man das oben genannte Produkt als weisse, bei 138–141°C schmelzende Kristalle erhält.

Beispiel 6

O-[2,6-Di-tert.-butyl-4-(2-carbomethoxyäthyl)-phenyl]-phenylphosphonochloridit

Verfährt man wie in Beispiel 1 unter Ersatz des 2,6-Di-tert.-butyl-p-kresols durch eine äquivalente Menge 3,5-Di-tert.-butyl-4-hydroxyhydrozimtsäure-methylester, so erhält man die oben genannte Verbindung als weisse, bei 86–88°C schmelzende Kristalle.

Beispiel 7

O-[2,6-Di-tert.-butyl-4-(2-carbomethoxyäthyl)-phenyl]-O′-(4-tert.-butylphenyl)-phenylphosphonit

Eine Lösung von 19,5 g der Verbindung aus Beispiel 6 in 40 ml trockenem Benzol wird tropfenweise bei 25–30°C rasch zu einer Lösung von 6,75 g p-tert.-Butylphenol und 4,65 g Triäthylamin in 40 ml Benzol gegeben. Man erhitzt 3 Stunden auf 65°C. Das gebildete Triäthylaminhydrochlorid wird durch Filtrieren entfernt und das klare Filtrat durch Vakuumdestillation eingeengt. Den gebildeten rohen Rückstand löst man in Hexan und wäscht die Lösung nacheinander mit wässriger 2n-Natronlauge und Wasser und trocknet schliesslich über wasserfreiem Natriumsulfat. Nach Filtrieren und Entfernung des Lösungsmittels im Vakuum wird der Rückstand aus Isopropanol zu weissen, bei 69–71°C schmelzenden Kristallen umkristallisiert.

Beispiel 8

O-(2,6-Di-tert.-butyl-4-methylphenyl)-O′-(4-tert.-butylphenyl)-phenylphosphonit

Die oben genannte Verbindung stellt man gemäss Beispiel 7 unter Ersatz des Phenylphosphonochloridits aus Beispiel 6 durch eine äquivalente Menge des Phenylphosphonochloridits aus Beispiel 1 als weisse, bei 101–103°C schmelzende Kristalle her.

Beispiel 9
O-(4-tert.-Butylphenyl)-O'-(2,4,6-tri-tert.-butylphenyl)-phenylphosphonit

Die oben genannte Verbindung stellt man gemäss Beispiel 2 unter Ersatz der Verbindung aus Beispiel 1 durch eine äquivalente Menge der Verbindung aus Beispiel 3 sowie unter Verwendung einer äquivalenten Menge p-tert.-Butylphenol an Stelle von 2,4-Di-tert.-butylphenol her. Das Produkt wird als viskose, bei 198°C/0,07 Torr siedende Flüssigkeit isoliert.

Beispiel 10
O-(2-tert.-Butyl-4-methylphenyl)-O'-(2,6-di-tert.-butyl-4-methylphenyl)-phenylphosphonit

Die oben genannte Verbindung stellt man nach der allgemeinen Arbeitsweise des Beispiels 2 unter Ersatz des 2,4-Di-tert.-butylphenols durch eine äquivalente Menge 2-tert.-Butyl-p-kresol her. Das Produkt wird als weisse, bei 108–111°C schmelzende Kristalle isoliert.

Beispiel 11
O-(2,6-Di-tert.-butylphenyl)-phenylphosphonochloridit

Diese Verbindung stellt man nach der allgemeinen Arbeitsweise des Beispiels 1 unter Ersatz des 2,6-Di-tert.-butyl-p-kresols durch eine äquivalente Menge 2,6-Di-tert.-butylphenol her.

Beispiel 12
O-(2,6-Di-tert.-butylphenyl)-O'-(2,4-di-tert.-butylphenyl)-phenylphosphonit

Die oben genannte Verbindung stellt man nach der allgemeinen Methode des Beispiels 2 unter Ersatz der Verbindung aus Beispiel 1 durch eine äquivalente Menge des Phenylphosphonochloridits aus Beispiel 11 her.

Beispiel 13
O-(2-tert.-Butyl-4,6-dimethylphenyl)-phenylphosphonochloridit

Die oben genannte Verbindung stellt man nach der allgemeinen Arbeitsweise des Beispiels 1 unter Ersatz des 2,6-Di-tert.-butyl-p-kresols durch eine äquivalente Menge 2-tert.-Butyl-4,6-dimethylphenol her.

Beispiel 14
O-(2-tert.-Butyl-4,6-dimethylphenyl)-O'-(2,4-di-tert.-butylphenyl)-phenylphosphonit

Die oben genannte Verbindung stellt man nach der allgemeinen Arbeitsweise des Beispiels 7 unter Ersatz des Phenylphosphonochloridits aus Beispiel 6 durch eine äquivalente Menge der Verbindung aus Beispiel 13 sowie unter Ersatz des p-tert.-Butylphenols durch eine äquivalente Menge 2,4-Di-tert.-butylphenol her.

Beispiel 15
Phenylphosphonigsäuremonoester des 3,5-Di-tert.-butyl-4-hydroxyhydrozimtsäuremethylesters

Man versetzt eine Lösung von 40,9 g 3,5-Di-tert.-butyl-4-hydroxyhydrozimtsäuremethylester in 70,7 g Triäthylamin bei 23–25°C tropfenweise mit 12,5 g Dichlorphenylphosphin. Man erhitzt 12 Stunden bei 75–80°C und giesst dann auf zerkleinertes Eis, das 60 g konzentrierte Salzsäure enthält. Dieses Gemisch wird gerührt, bis alles Eis geschmolzen ist, und dann mit Benzol extrahiert. Die Benzolphase wäscht man mit Wasser und mehrmals mit gesättigter Natriumbicarbonatlösung, bis nach der Beilsteinprobe im Benzol kein Halogen mehr nachweisbar ist. Nach Entfernung des Benzollösungsmittels aus der getrockneten Benzolphase wird der Rückstand bei 125–152°C/0,20 Torr andestilliert, um nicht umgesetzten 3,5-Di-tert.-butyl-4-hydroxyhydrozimtsäuremethylester zu entfernen. Der verbleibende Rückstand wird aus Cyclohexan und Hexan umkristallisiert, wobei man das oben genannte Produkt als weisse, bei 87–91°C schmelzende Kristalle erhält.

Beispiel 16
O-(2,4,6-Tri-tert.-butylphenyl)-phenylphosphonit

Man gibt 17,9 g Dichlorphenylphosphin im Verlauf von 5 Minuten bei 10–15°C tropfenweise zu einer Lösung von 26,2 g 2,4,6-Tri-tert.-butylphenol und 10,1 g Triäthylamin in 100 ml Toluol. Man erhitzt 24 Stunden bei 80–85°C, kühlt auf Raumtemperatur ab und befreit durch Filtrieren vom Triäthylaminhydrochlorid. Nach Waschen mit 6n-Salzsäure und dann mit Wasser wird die Toluolschicht im Vakuum eingeengt. Den gebildeten Rückstand kristallisiert man nacheinander aus Acetonitril und n-Hexan um, was weisse, bei 156–158°C schmelzende Kristalle ergibt.

Beispiel 17
O,O'-Bis-(2,6-di-tert.-butyl-4-carbomethoxyphenyl)-phenylphosphonit

Man versetzt eine Aufschlämmung von 26,4 g 3,5-Di-tert.-butyl-4-hydroxybenzoesäuremethylester in 50,5 g Triäthylamin bei 25–30°C tropfenweise mit 8,95 g Dichlorphenylphosphin. Dann erhitzt man 4 Stunden bei 65°C, nach welcher Zeit das Gemisch hochviskos wird. Zur Erleichterung des Rührens gibt man 90 ml Toluol dazu und erhitzt weitere 25 Stunden bei 65–70°C. Dann giesst man unter schnellem Rühren auf 300 g zerkleinertes Eis und 50 g konzentrierte Salzsäure. Nach Schmelzen des Eises wird die abgetrennte wässrige Schicht mit Toluol extrahiert. Die vereinigten Toluolphasen wäscht man nacheinander mit Wasser, gesättigter Natriumbicarbonatlösung und Wasser und trocknet dann über wasserfreiem Natriumsulfat. Nach Entfernung des Toluols im Vakuum wird der isolierte Rückstand aus einem Lösungsmittelgemisch von 250 ml Acetonitril und 30 ml Benzol umkristallisiert, was weisse, bei 168–171°C schmelzende Kristalle liefert.

Beispiel 18
O,O'-Bis-[2,6-di-tert.-butyl-4-(carbo-2,4-di-tert.-butylphenoxy)-phenyl]-phenylphosphonit

Die oben genannte Verbindung stellt man nach der allgemeinen Arbeitsweise des Beispiels 17 unter Ersatz des 3,5-Di-tert.-butyl-4-hydroxybenzoesäuremethylesters durch eine äquivalente Menge 2,6-Di-tert.-butyl-4-hydroxybenzoesäure-2,4-di-tert.-butylphenylester her. Man erhält das Produkt als weisse, bei 229–231°C schmelzende Kristalle.

Beispiel 19
O,O'-Bis-(2-tert.-butyl-4,6-dimethylphenyl)-phenylphosphonit

Die oben genannte Verbindung stellt man nach der allgemeinen Arbeitsweise des Beispiels 17 unter Ersatz des 3,5-Di-tert.-butyl-4-hydroxybenzoesäuremethylesters durch eine äquivalente Menge 2-tert.-Butyl-4,6-dimethylphenol als bei 170°C/0,01 Torr siedende Flüssigkeit her.

Beispiel 20
O,O'-Bis-[2-tert.-butyl-4-(2-carbomethoxyäthyl)-6-methylphenyl]-phenylphosphonit

Das oben genannte Produkt stellt man nach der allgemeinen Arbeitsweise des Beispiels 17 unter Ersatz des 3,5-Di-tert.-butyl-4-hydroxybenzoesäuremethylesters durch eine äquivalente Menge 2-tert.-Butyl-4-hydroxy-6-methylhydrozimtsäuremethylester her.

Beispiel 21
O,O'-Bis-[2,4,6-triisopropylphenyl]-phenylphosphonit

Die oben genannte Verbindung stellt man gemäss der allgemeinen Arbeitsweise des Beispiels 17 unter Ersatz des 3,5-Di-tert.-butyl-4-hydroxybenzoesäuremethylesters durch eine äquivalente Menge 2,4,6-Triisopropylphenol her. Das Produkt besitzt einen Schmelzpunkt von 75°C.

Beispiele 22–28
Weitere Verbindungen der Formel I lassen sich nach der allgemeinen Arbeitsweise der Beispiele 2, 5, 7 oder 17 herstellen.

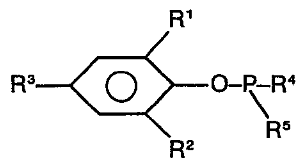

| Beispiel | R1 | R2 | R3 | R4 | R5 |
|---|---|---|---|---|---|
| 22 | t-Bu | t-Bu | Me | Phenyl | 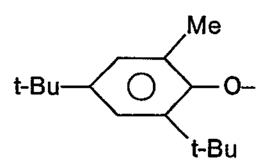 |
| 23 | t-Bu | t-Bu | t-Bu | Phenyl | 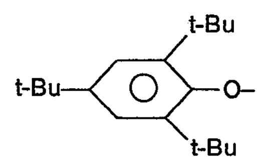 |
| 24 | t-Bu | t-Bu | –COOMe | n-Dodecyl | 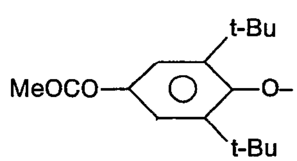 |
| 25 | t-Bu | t-Bu | 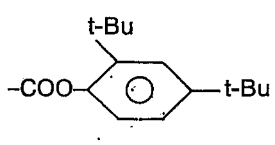 | n-Octadecyl | 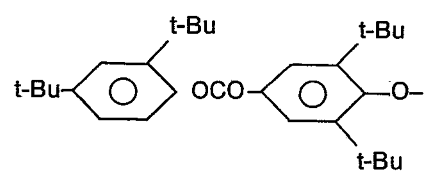 |
| 26 | t-Bu | t-Bu | $-C_{18}H_{37}$ | Methyl | OH |

| Beispiel | R1 | R2 | R3 | R4 | R5 |
|---|---|---|---|---|---|
| 27 | t-Bu | t-Bu | $-COOC_{18}H_{37}$ | Phenyl | 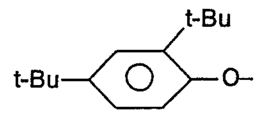 |
| 28 | t-Bu | t-Bu | Me | Phenyl | 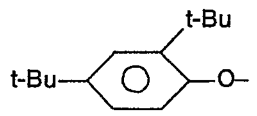 |

t-Bu = tert.-Butyl
Me = Methyl

Beispiel 29
O,O′-Bis-(2,6-di-tert.-butyl-4-methylphenyl)-phenylphosphonit

Man erhitzt 48,5 g 2,6-Di-tert.-butyl-4-methylphenol, 27,3 g 45,3%ige wässrige Kalilauge und 300 ml Toluol etwa 5 Stunden bei 108–111 °C unter Rückfluss, während sowohl die Hauptmasse des Wassers als auch das Reaktionswasser aus dem Toluol/Wasserazeotrop entfernt wird. Die abgekühlte weisse Aufschlämmung versetzt man bei 11°C mit 17,9 g Phenyldichlorphosphin und rührt 2 Stunden bei Raumtemperatur. 3 ml trockenes N,N-Dimethylformamid werden zugesetzt und das Gemisch über Nacht bei Raumtemperatur und dann 3 Stunden bei 50°C gerührt. Nach Zugabe von 250 ml Wasser wird die grüne Farbe durch Zusatz von 3 ml Essigsäure entfernt. Dann wäscht man die abgetrennte Toluolphase mit Wasser und trocknet über Natriumsulfat. Das durch Destillation des Toluols erhaltene Rohprodukt wird mit Isopropanol angerieben, was weisse Kristalle ergibt, die nach Umkristallisation aus Isopropanol bei 181–183°C schmelzen.

Beispiel 29(a)
O,O′-Bis-(2,4,6-tri-tert.-butylphenyl)-phenylphosphonit

Die oben genannte, bei 218–220°C schmelzende Verbindung stellt man nach der allgemeinen Arbeitsweise des Beispiels 29 unter Ersatz des 2,6-Di-tert.-butyl-4-methylphenols durch eine äquivalente Menge 2,4,6-Tri-tert.-butylphenol her.

Beispiel 30
O-(2,4-Di-tert.-butylphenyl)-phenylphosphonochloridit

16,5 g 2,4-Di-tert.-butylphenol und 14,8 g Phenyldichlorphosphin werden 3 Stunden bei 80–90°C in einer trocknen Stickstoffatmosphäre zusammen erhitzt. Flüchtige Stoffe entfernt man bei 40–50°C/0,2 Torr und destilliert das Produkt bei 160–165°C/1–5 μ. Das Produkt kristallisiert zu einem weissen, bei 68–70°C schmelzenden Feststoff.

Beispiel 31
O-(2,6-Di-tert.-butyl-4-methylphenyl)-O′-(2,4-di-tert.-butylphenyl)-phenylphosphonit

Man trägt 3,9 g 45,3%ige wässrige Kalilauge und 7,0 g 2,6-Di-tert.-butyl-4-methylphenol in 60 ml Toluol ein und erhitzt unter Rühren zum Rückfluss, bis sich 2,7 ml Wasser angesammelt haben. Im Verlauf von 10 Minuten tropft man bei −10°C 11,0 g der in 20 ml Toluol gelösten Verbindung aus Beispiel 30 dazu. Man rührt 1 Stunde bei −10°C und lässt das Reaktionsgemisch sich auf Raumtemperatur erwärmen. Man setzt 10 ml trockenes Dimethylformamid zu der milchigen Dispersion und rührt das System über Nacht. Das ausgefallene Kaliumchlorid wird durch Filtrieren entfernt, und sämtliche flüchtige Stoffe werden durch Destillation entfernt. Den trockenen Rückstand löst man in 26 ml Isopropanol und isoliert ihn als weissen kristallinen, bei 126–128°C schmelzenden Feststoff. Laut Infrarotspektroskopie und Dünnschichtchromatographie ist das Material identisch mit dem in Beispiel 2 hergestellten.

Beispiel 32
Wasseraufnahme bei 80% relativer Feuchtigkeit

Zur Messung der Wasseraufnahme der vorliegenden Verbindungen wird eine 200-mg-Probe eines Phosphonits in eine Petrischale von 5 cm Durchmesser und 1,5 cm Wandhöhe eingewogen. Dann stellt man die Schale samt Probe in eine Glaskammer, die eine wässrige Lösung von 141,5 g Ammoniumchlorid in 386,5 ml Wasser enthält, wodurch eine Atmosphäre mit 80% relativer Feuchtigkeit bei Raumtemperatur erzeugt wird.

Die Wasseraufnahme wird periodisch durch Wägen der Schale samt Probe bestimmt. Ferner notiert man jegliche Änderung im physikalischen Zustand der Probe. Schliesslich werden die gebildeten chemischen Produkte durch Aufnahme des Infrarotspektrums einer 1%igen Lösung der Produkte in Tetrachlorkohlenstoff qualitativ bestimmt. Ferner analysiert man die Proben durch Dünnschichtchromatographie, wobei man von E. Merck AG, Darmstadt, Deutschland, gewerblich hergestellte, mit Kieselgel F-254 beschichtete Glasplatten verwendet. Die Ergebnisse sind in der folgenden Tabelle angeführt.

Beispiel 33
Stabilität von Polypropylen bei der Verarbeitung bei 260°C

| Verbindung aus Beispiel | % Gewichtszunahme | Tage bei 80% r.F. | Anmerkungen |
|---|---|---|---|
| 2 | 0 | 20 | |
| | 0,1 | 49 | wenig oder keine Hydrolyse |
| 4 | 0,2 | 14 | |
| | 0,2 | 32 | |
| | 0,6 | 46 | |
| | 0,5 | 53 | |
| | 0,5 | 62 | wenig oder keine Hydrolyse |
| 7 | 3,3 | 21 | fast vollständig hydrolysiert |
| 8 | 1,8 | 18 | merkliche Hydrolyse |
| 17 | 0,5 | 20 | |
| | 0,2 | 57 | wenig oder keine Hydrolyse |

Die Grundrezeptur enthält 100 Teile unstabilisiertes Polypropylen (® Profax 6801, Hercules) mit 0,10 Teilen Kalziumstearat. Die zu prüfenden Stabilisatoren werden aus Lösungen in Methylenchlorid in das Polypropylen unter Zuhilfenahme von Lösungsmitteln eingemischt. Nach Entfernung des Lösungsmittels durch Eindampfen bei vermindertem Druck extrudiert man die stabilisierte Kunstharzrezeptur bei 100 U.p.M. aus einem Extruder von 2,54 cm Durchmesser unter den folgenden Extruderbedingungen:

| Stelle im Extruder | Temperatur °C |
|---|---|
| Zylinder 1 | 232 |
| Zylinder 2 | 246 |
| Zylinder 3 | 260 |
| Düse 1 | 260 |
| Düse 2 | 260 |

Während der Extrusion wird der Innendruck im Extruder mittels eines Druckgebers bestimmt. Nach der ersten, dritten und fünften Extrusion wird jeweils das Kunstharzgranulat bei 193°C zu 3,2 mm dicken Plättchen verpresst, und die Vergilbungszahl (YI) der Proben wird gemäss ASTM D1925-63T bestimmt. Niedrige YI-Werte zeigen geringere Vergilbung an.

Die Schmelzflussgeschwindigkeit wird gemäss ASTM-Methode 1238 Bedingung L bestimmt. Die Schmelzflussgeschwindigkeit variiert umgekehrt zum Geberdruck, und diese stellen beide ein relatives Mass für das Molekulargewicht des Polypropylens dar. Hohe Schmelzflussgeschwindigkeiten zeigen niedrigere Molekulargewichte des Polymeren an und weisen somit daraufhin, dass möglicherweise ein Abbau des Polymeren stattfindet. Wenn demnach die Schmelzflussgeschwindigkeit nach der fünften Extrusion eine minimale Änderung gegenüber derjenigen nach der ersten Extrusion zeigt und wenn der Geberdruck nach der fünften fast so hoch ist wie nach der ersten Extrusion, so wird das Polypropylen durch die gegebene Stabilisierungsrezeptur gut stabilisiert.

Die Ergebnisse sind aus Tabellen I–II ersichtlich.

Die vorliegenden Verbindungen, insbesondere Verbindungen aus Beispielen 2, 4 und 7, ergeben Polypropylen, das nicht nur gegen Abbau, wie aus den Geberdruckmessungen ersichtlich, sondern auch gegen Verfärbung gut stabilisiert ist.

Tabelle I

Stabilität von Polypropylen bei der Verarbeitung bei 260°C

| Stabilisator | Stabilisatorkonzentration Gew.-% | Geberdruck nach Extrusion kg/cm² | | | Schmelzflussgeschwindigkeit nach Extrusion Gramm/10 Minuten | | | Vergilbungszahl Farbe nach Extrusion | | |
|---|---|---|---|---|---|---|---|---|---|---|
| | | 1 | 3 | 5 | 1 | 3 | 5 | 1 | 3 | 5 |
| Grundrezeptur | – | 73,5 | 49,3 | 26,9 | – | – | – | 3,3 | 4,3 | 5,2 |
| IRGANOX 1010* | 0,1 | 82,0 | 68,2 | 59,6 | – | – | – | 4,5 | 7,6 | 8,8 |
| IRGANOX 1010* (0,1%) plus Verbindung aus | | | | | | | | | | |
| Beispiel 8 | 0,05 | 92,7 | 86,1 | 76,4 | 0,16 | 0,33 | 0,67 | 5,2 | 6,2 | 8,1 |
| Beispiel 7 | 0,05 | 94,2 | 87,5 | 82,0 | 0,16 | 0,27 | 0,47 | 4,5 | 5,5 | 7,0 |
| Beispiel 2 | 0,05 | 94,5 | 88,5 | 82,2 | 0,15 | 0,26 | 0,50 | 4,1 | 5,9 | 7,4 |
| Beispiel 17 | 0,05 | 92,5 | 84,0 | 76,6 | – | – | – | 5,3 | 7,9 | 11,0 |
| Beispiel 18 | 0,05 | 89,0 | 79,0 | 70,7 | – | – | – | 3,6 | 6,1 | 8,9 |

* IRGANOX 1010 = Neopentantetrayl-tetrakis-(3,5-di-tert.-butyl-4-hydroxyhydrozimtsäureester)

Tabelle II
Stabilität von Polypropylen bei der Verarbeitung bei 260°C

| Stabilisator | Stabilisatorkonzentration Gew.-% | Geberdruck nach Extrusion kg/cm² | | | Schmelzflussgeschwindigkeit nach Extrusion Gramm/10 Minuten | | | Vergilbungszahl Farbe nach Extrusion | | |
|---|---|---|---|---|---|---|---|---|---|---|
| | | 1 | 3 | 5 | 1 | 3 | 5 | 1 | 3 | 5 |
| Grundrezeptur | – | 71,7 | 55,3 | 44,8 | 0,75 | 1,78 | 3,25 | 5,3 | 7,4 | 9,3 |
| IRGANOX 1010* | 0,1 | 79,0 | 68,5 | 60,9 | 0,30 | 0,67 | 1,10 | 9,0 | 12,2 | 14,7 |
| IRGANOX 1010* (o,1%) plus Verbindung aus Beispiel 4 | 0,05 | 91,2 | 84,0 | 78,7 | 0,17 | 0,24 | 0,32 | 5,5 | 7,4 | 9,3 |

* IRGANOX 1010 = Neopentantetrayl-tetrakis-(3,5-di-tert.-butyl-4-hydroxyhydrozimtsäureester)

Beispiel 34
Stabilität von Polypropylen bei der Verarbeitung bei 288°C

Unter Anwendung der allgemeinen Arbeitsweise von Beispiel 31 wird die Stabilität von Polypropylen bei der Verarbeitung bei 288°C unter Verwendung eines bei 110 U.p.M. laufenden Laboratoriumsextruders sowie unter den folgenden Extruderbedingungen geprüft:

| Stelle im Extruder | Temperatur °C |
|---|---|
| Zylinder 1 | 260 |
| Zylinder 2 | 274 |
| Zylinder 3 | 288 |
| Düse 1 | 288 |
| Düse 2 | 288 |

Die Ergebnisse sind in Tabelle III angegeben.

Die Verbindung aus Beispiel 2 weist bei dieser Prüfung eine hervorragende Stabilisationswirksamkeit auf.

Tabelle III
Stabilität von Polypropylen bei der Verarbeitung bei 288°C

| Stabilisator | Stabilisatorkonzentration Gew.-% | Geberdruck nach Extrusion kg/cm² | | | Schmelzflussgeschwindigkeit nach Extrusion Gramm/10 Minuten | | | Vergilbungszahl Farbe nach Extrusion | | |
|---|---|---|---|---|---|---|---|---|---|---|
| | | 1 | 3 | 5 | 1 | 3 | 5 | 1 | 3 | 5 |
| Grundrezeptur | – | 53,5 | 25,2 | 15,7 | 1,63 | 9,40 | 20,60 | 4,3 | 4,8 | 5,8 |
| IRGANOX 1010* | 0,1 | 64,7 | 46,9 | 36,9 | 0,68 | 1,60 | 3,25 | 4,7 | 7,6 | 10,1 |
| Verbindung aus Beispiel 2 | 0,1 | 80,7 | 71,4 | 63,7 | 0,21 | 0,42 | 0,70 | 5,6 | 7,5 | 9,8 |

* IRGANOX 1010 = Neopentantetrayl-tetrakis-(3,5-di-tert.-butyl-4-hydroxyhydrozimetsäureester)

Beispiel 35
Stabilität von hochmolekularem Polyäthylen hoher
Dichte bei der Verarbeitung bei 316°C

Unter Anwendung der allgemeinen Arbeitsweise von Beispiel 33 wird die Stabilität von hochmolekularem Polyäthylen hoher Dichte (Union Carbide 10780-64A) mit einer Nennschmelzflussgeschwindigkeit von 5,0 Gramm/10 Minuten gemessen.

Die Ergebnisse sind in Tabelle IV angeführt.

Die Verbindung aus Beispiel 2 weist bei dieser Prüfung eine hervorragende Stabilisierung gegen Verfärbung des Polyäthylens auf.

Beispiel 36
Lichtstabilisierung von Polypropylen

Man verwendet einen FS/BL-Strahlungsapparat, der aus 40 abwechselnden Röhren fluoreszierender Höhensonnen und Schwarzlampen (je 20) besteht; 0,127-mm-Filme aus Polypropylen (Profax 6801, Hercules), die 0,3 Gew.-% des zu prüfenden Stabilisators enthalten, werden auf 7,62 × 5,08 cm, Infrarotkartenhalter mit 2,54 × 0,635 cm Fenstern aufgezogen und 5,08 cm von den Röhren im FS/BL-Apparat auf einer rotierenden Trommel montiert. Man notiert die erforderliche Zeit in Stunden, bis sich 0,5 Carbonylextinktionseinheiten, wie durch Infrarotspektrosko-

Tabelle IV

Stabilität von hochmolekularem Polyäthylen hoher Dichte bei der Verarbeitung bei 316°C

| Stabilisator | Stabilisator-konzentration | Geberdruck nach Extrusion kg/cm² | | | Schmelzfluss-geschwindigkeit nach Extrusion Gramm/10 Minuten | | | Vergilbungszahl Farbe nach Extrusion | | |
|---|---|---|---|---|---|---|---|---|---|---|
| | Gew.% | 1 | 3 | 5 | 1 | 3 | 5 | 1 | 3 | 5 |
| Ohne | – | 72,4 | 74,5 | 73,5 | 3,8 | 3,1 | 2,9 | –0,7 | 1,2 | 1,9 |
| IRGANOX 1076* | 0,1 | 74,1 | 73,5 | 72,4 | 4,4 | 4,1 | 4,0 | –1,2 | 2,5 | 3,5 |
| IRGANOX 1076* (0,1%) plus Verbindung aus Beispiel 2 | 0,05 | 78,4 | 78,4 | 77,6 | 4,8 | 3,9 | 3,5 | –3,4 | –1,3 | –1,1 |
| IRGANOX 1010** | 0,1 | 74,5 | 73,5 | 71,4 | 4,4 | 4,1 | 4,2 | –0,8 | 5,7 | 9,5 |
| IRGANOX 1010** (0,1%) plus Verbindung aus Beispiel 2 | 0,05 | 75,6 | 74,5 | 73,5 | 4,9 | 4,5 | 4,2 | –3,6 | 0,7 | 2,8 |

* IRGANOX 1076 = n-Octadecyl-3,5-di-tert.-butyl-4-hydroxyhydrozimtsäureester

** IRGANOX 1010 = Neopentantetrayl-tetrakis-(3,5-di-tert.-butyl-4-hydroxyhydrozimtsäureester)

pie bestimmt, in den Testfilmen entwickelt haben. Die Bildung von Carbonylgruppen im Polypropylen ist dem Ausmass des durch die Ultraviolettbelichtung verursachten Abbaus proportional.

Die Prüfergebnisse sind in Tabelle V angeführt.

Die vorliegenden Verbindungen, insbesondere die Verbindung aus Beispiel 18, ergeben bei dieser Prüfung eine gute Stabilisierung gegen Lichtabbau des Polypropylens.

Tabelle V

| Stabilisator 0,3 Gew.-% | Stunden bis zur Versagung (Entwicklung von 0,5 Carbonylextinktionsheiheit) |
|---|---|
| Ohne | 200 |
| Verbindung aus Beispiel 2 | 590 |
| Verbindung aus Beispiel 4 | 770 |
| Verbindung aus Beispiel 7 | 490 |
| Verbindung aus Beispiel 8 | 520 |
| Verbindung aus Beispiel 18 | 1010 |

Beispiel 37

Stabilisierung von Polyäthylenterephthalat

Unter Stickstoff gibt man 1% der Verbindung aus Beispiel 2 als Stabilisator unter Rühren zu geschmolzenem Polyäthylenterephthalat bei 270°C. Das so erhaltene abgemischte Polymer wird mit festem Kohlendioxyd gemahlen, bis die Teilchengrösse kleiner als 100 Mikron Durchmesser ist. Dann bestimmt man wie folgt die Temperatur, bei welcher der Beginn der Oxydation eintritt:

Man bringt etwa 1 Milligramm des wie oben hergestellten Polyesterpulvers in die Zelle eines Perkin-Elmer Differentialkalorimeters ein und erhitzt unter Stickstoff, bis eine Temperatur von 225°C erreicht wird. Der Stickstoffstrom wird abgestellt, und Sauerstoff wird in einer Menge von 15 ml pro Minute eingeleitet, während man mit einer Geschwindigkeit von 1 Grad pro Minute erhitzt, bis der exotherme Oxydationseffekt registriert wird. Dabei wird festgestellt, dass die Oxydationstemperatur des abgemischten Pulvers höher liegt als die des Grundpolyesterpulvers ohne den Stabilisator. Die durch den Stabilisator bedingte höhere Oxydationstemperatur zeigt deutlich die erhebliche Verbesserung der Oxydationshemmung im Polyester. Ebenfalls ist die Farbe des stabilisierten Polyesters gegenüber einem solchen ohne den Zusatzstoff verbessert.

Beispiel 38

Stabilisierung von Acrylnitril/Butadien/Styrol (ABS)

ABS-Kunstharz wird durch 7,5 Stunden Erhitzen der folgenden Rezepturen bei 80°C hergestellt:

Kunstharz A:

| | Teile |
|---|---|
| Butadien | 10 |
| Acrylnitril | 24 |
| Styrol | 65,8 |
| 2,2′-Azobisisobutyronitril | 0,1 |
| | 99,9 |

Kunstharz B:

Dieses Kunstharz wird auf die gleiche Weise wie Kunstharz A hergestellt, ausser dass es zusätzlich 0,25% des Stabilisators enthält.

Die Oxydationstemperatur der Kunstharze wird jeweils durch Differenzscanning-Kalorimetrie (DSC) unter Anwendung der folgenden Arbeitsweise bestimmt:

Man bringt 10 mg in den DSC-Tiegel ein und erhitzt von Raumtemperatur mit einer Geschwindigkeit von 20°C/Minute in einem Sauerstoffstrom, der mit einer Geschwindigkeit von 250 ml/Minute fliesst. Die Temperatur, bei der man einen exothermen Effekt beobachtet, wird für jedes der Kunstharze aufgezeichnet.

Mit jeweils 0,25% eines Stabilisators aus Beispiel 1, 2, 4, 7, 8, 9 bzw. 14 hergestellte Proben von ABS-Kunstharzen weisen sämtliche einen exothermen Effekt bei einer höheren Temperatur auf als die entsprechenden ABS-Kunstharze, die keinen Stabilisator enthalten, was auf eine höhere thermische Stabilität der stabilisierten Kunstharze hinweist.

Beispiel 39
Stabilisierung von Polycarbonat

Ein Polycarbonatgrundkunstharz (Lexan, General Electric) wird in einem Waring-Blender mit 1,0% der Verbindung aus Beispiel 12 vermischt, wobei das Grundkunstharz ferner 0,1% Octadecyl-3,5-di-t-butyl-4-hydroxyhydrozimtsäureester enthält. Das abgemischte Kunstharz wird verpresst, geschnitzelt und in einen Standardschmelzindexapparat eingebracht. Man hält 30 Minuten bei 350°C, entfernt danach eine Probe, verpresst zu Plättchen und prüft auf Farbe. Die beide Stabilisatoren enthaltende Probe hat eine viel hellere Farbe als die, welche nur Octadecyl-3,5-di-t-butyl-4-hydroxyzimtsäureester enthält.

**Patentansprüche**

1. Verbindungen der Formel

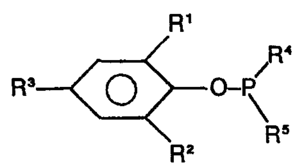

worin $R^1$ für verzweigtes Alkyl mit 3 bis 8 Kohlenstoffatomen, Benzyl, α-Methylbenzyl oder α,α-Dimethylbenzyl, $R^2$ für Alkyl mit 1 bis 18 Kohlenstoffatomen, Benzyl, α-Methylbenzyl oder α,α-Dimethylbenzyl, $R^3$ für Wasserstoff, Alkyl mit 1 bis 18 Kohlenstoffatomen, Carbalkoxy mit 2 bis 19 Kohlenstoffatomen, Carbalkoxyalkyl mit 3 bis 24 Kohlenstoffatomen, Carbophenoxy, Carbophenoxyalkyl mit 8 bis 16 Kohlenstoffatomen oder im Phenoxy durch Alkylgruppen mit 1 bis 8 Kohlenstoffatomen je Alkylgruppe 1fach bis 3fach substituiertes Carbophenoxy oder Carbophenoxyalkyl, $R^4$ für Alkyl mit 1 bis 18 Kohlenstoffatomen oder gegebenenfalls durch Alkylgruppen mit 1 bis 8 Kohlenstoffatomen je Alkylgruppe 1fach bis 3fach substituiertes Phenyl, $R^5$ für Halogen, $-XH$ oder $-XR^6$, X für O oder S, $R^6$ für alkylsubstituiertes Phenyl der Formel

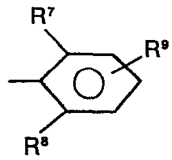

$R^7$ für Wasserstoff, verzweigtes Alkyl mit 3 bis 18 Kohlenstoffatomen, Benzyl, α-Methylbenzyl oder α,α-Dimethylbenzyl, $R^8$ für Wasserstoff, Alkyl mit 1 bis 18 Kohlenstoffatomen, Benzyl, α-Methylbenzyl oder α,α-Dimethylbenzyl sowie $R^9$ für Wasserstoff, Alkyl mit 1 bis 18 Kohlenstoffatomen, Carbalkoxy mit 2 bis 19 Kohlenstoffatomen, Carbalkoxyalkyl mit 3 bis 24 Kohlenstoffatomen, Carbophenoxy, Carbophenoxyalkyl mit 8 bis 16 Kohlenstoffatomen oder im Phenoxy durch Alkylgruppen mit 1 bis 8 Kohlenstoffatomen je Alkylgruppe 1fach bis 3fach substituiertes Carbophenoxy oder Carbophenoxyalkyl steht.

2. Verbindungen nach Anspruch 1, dadurch gekennzeichnet, dass $R^1$ für verzweigtes Alkyl mit 4 bis 12 Kohlenstoffatomen, α-Methylbenzyl oder α,α-Dimethylbenzyl, $R^2$ für Alkyl mit 3 bis 12 Kohlenstoffatomen, α-Methylbenzyl oder α,α-Dimethylbenzyl, $R^3$ für Wasserstoff, Alkyl mit 1 bis 18 Kohlenstoffatomen, Carbalkoxy mit 2 bis 19 Kohlenstoffatomen, Carbalkoxyalkyl mit 3 bis 21 Kohlenstoffatomen oder im Phenoxy durch Alkylgruppen mit 1 bis 8 Kohlenstoffatomen je Alkylgruppe 1fach bis 3fach substituiertes Carbophenoxy, $R^4$ für Alkyl mit 1 bis 18 Kohlenstoffatomen oder gegebenenfalls durch Alkylgruppen mit 1 bis 8 Kohlenstoffatomen je Alkylgruppe 1fach bis 3fach substituiertes Phenyl, $R^5$ für Chlor oder $-XR^6$, worin $R^6$ die in Anspruch 1 angegebene Bedeutung hat, X für O, $R^7$ für Wasserstoff, verzweigtes Alkyl mit 4 bis 12 Kohlenstoffatomen, α -Methylbenzyl oder α,α-Dimethylbenzyl, $R^8$ für Wasserstoff, Alkyl mit 1 bis 12 Kohlenstoffatomen, α-Methylbenzyl oder α,α-Dimethylbenzyl sowie $R^9$ für Wasserstoff, Alkyl mit 1 bis 18 Kohlenstoffatomen, Carbalkoxy mit 2 bis 19 Kohlenstoffatomen, Carbalkoxyalkyl mit 3 bis 21 Kohlenstoffatomen oder im Phenoxy durch Alkylgruppen mit 1 bis 8 Kohlenstoffatomen je Alkylgruppe 1fach bis 3fach substituiertes Carbophenoxy steht, mit der Massgabe, dass $R^7$, $R^8$ und $R^9$ nicht alle gleichzeitig Wasserstoff sein können.

3. Verbindungen nach Anspruch 1, dadurch gekennzeichnet, dass $R^1$ für tertiäres Alkyl mit 4 bis 8 Kohlenstoffatomen, $R^2$ für verzweigtes Alkyl mit 4 bis 8 Kohlenstoffatomen, $R^3$ für Wasserstoff, Alkyl mit 1 bis 9 Kohlenstoffatomen, Carbalkoxy mit 2 bis 9 Kohlenstoffatomen, Carbalkoxyalkyl mit 3 bis 11 Kohlenstoffatomen oder im Phenoxy durch Alkylgruppen mit 1 bis 4 Kohlenstoffatomen je Alkylgruppe 1fach bis 3fach substituiertes Carbophenoxy, $R^4$ für gegebenenfalls durch Alkylgruppen mit 1 bis 4 Kohlenstoffatomen je Alkylgruppe 1fach bis 3fach substituiertes Phenyl, $R^5$ für Chlor oder $-XR^6$, worin $R^6$ die in Anspruch 1 angegebene Bedeutung hat, X für O, $R^7$ für tertiäres Alkyl mit 4 bis 8 Kohlenstoffatomen, $R^8$ für Wasserstoff oder Alkyl mit 1 bis 8 Kohlenstoffatomen sowie $R^9$ für Wasserstoff, Alkyl mit 1

bis 9 Kohlenstoffatomen, Carbalkoxy mit 2 bis 9 Kohlenstoffatomen, Carbalkoxyalkyl mit 3 bis 11 Kohlenstoffatomen oder im Phenoxy durch Alkylgruppen mit 1 bis 4 Kohlenstoffatomen je Alkylgruppe 1fach bis 3fach substituiertes Carbophenoxy steht.

4. Verbindungen nach Anspruch 1, dadurch gekennzeichnet, dass $R^1$ für Isopropyl oder tert.-Butyl, $R^2$ für Alkyl mit 1 bis 4 Kohlenstoffatomen, $R^3$ für Wasserstoff, Alkyl mit 1 bis 18 Kohlenstoffatomen, $-CH_2CH_2COOCH_3$, $-COOCH_3$, $-COOC_{18}H_{37}$ $-COOCH_3$ oder

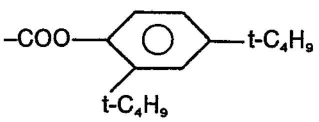

$R^4$ für Alkyl mit 1 bis 18 Kohlenstoffatomen oder Phenyl, $R^5$ für Chlor, –XH oder $XR^6$, X für O, $R^6$ für

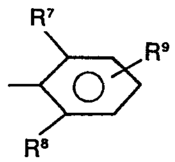

$R^7$ für Wasserstoff, Isopropyl oder tert.-Butyl, $R^8$ für Wasserstoff oder Alkyl mit 1 bis 4 Kohlenstoffatomen sowie $R^9$ für Alkyl mit 1 bis 4 Kohlenstoffatomen, $-COOCH_3$, $-CH_2CH_2COOCH_3$ oder

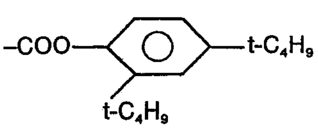

steht, mit der Massgabe, dass $R^7$ und $R^8$ nicht beide gleichzeitig Wasserstoff sein können.

5. O-(2,6-Di-tert.-butyl-4-methylphenyl)-O′-2,4-di-tert.-butylphenyl)-phenylphosphonit als Verbindung nach Anspruch 1.

6. O-(2,4-Di-tert.-butylphenyl)-O′-(2,4,6-tri-tert.-butylphenyl)-phenylphosphonit als Verbindung nach Anspruch 1.

7. O-[2,6-Di-tert.-butylphenyl-4-(2-carbomethoxy-äthyl)-phenyl]-O′-(4-tert.-butylphenyl)-phenylphosphonit als Verbindung nach Anspruch 1.

8. O-(2,6-Di-tert.-butyl-4-methylphenyl)-O′-(4-tert.-butylphenyl)-phenylphosphonit als Verbindung nach Anspruch 1.

9. O,O′-Bis-(2,6-di-tert.-butyl-4-carbomethoxyphenyl)-phenylphosphonit als Verbindung nach Anspruch 1.

10. O,O′-Bis-[2,6-di-tert.-butyl-4-(carbo-2,4-di-tert.-butylphenoxy)-phenyl]-phenylphosphonit als Verbindung nach Anspruch 1.

11. Stoffzusammensetzungen, bestehend aus einem organischen Material, welches oxydativem, thermischem oder aktinischem Abbau unterliegt, dadurch gekennzeichnet, dass sie mit 0,01 bis 5 Gew.-% einer Verbindung nach Anspruch 1 stabilisiert sind.

12. Zusammensetzungen nach Anspruch 11, dadurch gekennzeichnet, dass als organisches Material ein synthetisches Polymer vorliegt.

13. Zusammensetzungen nach Anspruch 12, dadurch gekennzeichnet, dass als Polymer ein Polyolefinhomopolymer oder -copolymer vorliegt.

14. Zusammensetzungen nach Anspruch 13, dadurch gekennzeichnet, dass sie mit O-(2,6-Di-tert.-butyl-4-methylphenyl)-O′-(2,4-di-tert.-butylphenyl)-phenylphosphonit, O-(2,4-Di-tert.-butylphenyl)-O′-(2,4,6-tri-tert.-butylphenyl)-phenylphosphonit oder O,O′-Bis-[2,6-di-tert.-butyl-4-(carbo-2,4-di-tert.-butylphenoxy)-phenyl]-phenylphosphonit stabilisiert sind.

15. Verbindungen der Formel

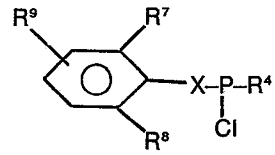

worin $R^4$ für Alkyl mit 1 bis 18 Kohlenstoffatomen oder gegebenenfalls durch Alkylgruppen mit 1 bis 8 Kohlenstoffatomen je Alkylgruppe 1fach bis 3fach substituiertes Phenyl, X für O oder S, $R^7$ für Wasserstoff, verzweigtes Alkyl mit 3 bis 18 Kohlenstoffatomen, Benzyl, α-Methylbenzyl oder α,α-Dimethylbenzyl, $R^8$ für Wasserstoff, Alkyl mit 1 bis 18 Kohlenstoffatomen, Benzyl, α-Methylbenzyl oder α,α-Dimethylbenzyl sowie $R^9$ für Wasserstoff, Alkyl mit 1 bis 18 Kohlenstoffatomen, Carbalkoxy mit 2 bis 19 Kohlenstoffatomen, Carbalkoxyalkyl mit 3 bis 24 Kohlenstoffatomen, Carbophenoxy, Carbophenoxyalkyl mit 8 bis 16 Kohlenstoffatomen oder im Phenoxy durch Alkylgruppen mit 1 bis 8 Kohlenstoffatomen je Alkylgruppe 1fach bis 3fach substituiertes Carbophenoxy oder Carbophenoxyalkyl steht, mit der Massgabe, dass $R^7$, $R^8$ und $R^9$ nicht alle gleichzeitig Wasserstoff sein können.

16. Verbindungen nach Anspruch 15, dadurch gekennzeichnet, dass $R^4$ für Alkyl mit 1 bis 8 Kohlenstoffatomen oder gegebenenfalls durch Alkylgruppen mit 1 bis 8 Kohlenstoffatomen je Alkylgruppe 1fach bis 3fach substituiertes Phenyl, X für O, $R^7$ für Wasserstoff, verzweigtes Alkyl mit 4 bis 12 Kohlenstoffatomen, α-Methylbenzyl oder α,α-Dimethylbenzyl, $R^8$ für Wasserstoff, Alkyl mit 1 bis 12 Kohlenstoffatomen, α-Methylbenzyl oder α,α-Dimethylbenzyl sowie $R^9$ für Wasserstoff, Alkyl mit 1 bis 18 Kohlenstoffatomen, Carbalkoxy mit 2 bis 19 Kohlenstoffatomen, Carbalkoxyalkyl mit 3 bis 21 Kohlenstoffatomen oder im Phenoxy durch Alkylgruppen mit 1 bis 8 Kohlenstoffatomen je Alkylgruppe 1fach bis 3fach substituiertes Carbophenoxy steht, mit der Massgabe, dass $R^7$, $R^8$ und $R^9$ nicht alle gleichzeitig Wasserstoff sein können.

17. Verbindungen nach Anspruch 15, dadurch gekennzeichnet, dass $R^4$ für gegebenenfalls durch Alkylgruppen mit 1 bis 4 Kohlenstoffatomen je Alkylgruppe 1fach bis 3fach substituiertes Phenyl, X für O, $R^7$ für tertiäres Alkyl mit 4 bis 8 Koh-

lenstoffatomen, $R^8$ für Wasserstoff oder Alkyl mit 1 bis 8 Kohlenstoffatomen sowie $R^9$ für Wasserstoff, Alkyl mit 1 bis 9 Kohlenstoffatomen, Carbalkoxy mit 2 bis 9 Kohlenstoffatomen, Carbalkoxyalkyl mit 3 bis 11 Kohlenstoffatomen oder im Phenoxy durch Alkylgruppen mit 1 bis 4 Kohlenstoffatomen je Alkylgruppe 1fach bis 3fach substituiertes Carbophenoxy steht.

18. O-(2,4-Di-tert.-butylphenyl)-phenylphosphonochloridit
als Verbindung nach Anspruch 15.

19. O,O′-Bis-(2,6-di-tert.-butylmethylphenyl)-phenylphosphonit
als Verbindung nach Anspruch 1.

20. O,O′-Bis-(2,4,6-tri-tert.-butylphenyl)-phenylphosphonit
als Verbindung nach Anspruch 1.

**Claims**

1. A compound of the formula

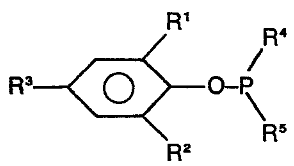

wherein

$R^1$ is branched alkyl of 3 to 18 carbon atoms, benzyl, α-methylbenzyl or α,α-dimethylbenzyl,

$R^2$ is alkyl of 1 to 18 carbon atoms, benzyl, α-methylbenzyl or α,α-dimethylbenzyl,

$R^3$ is hydrogen, alkyl of 1 to 18 carbon atoms, carboalkoxy of 2 to 19 carbon atoms, carboalkoxyalkyl of 3 to 24 carbon atoms, carbophenoxy, carbophenoxyalkyl of 8 to 16 carbon atoms; or carbophenoxy or carbophenoxyalkyl with the phenoxy substituted with 1 to 3 alkyl groups with 1 to 8 carbon atoms in each alkyl group,

$R^4$ is alkyl of 1 to 18 carbon atoms, phenyl or phenyl substituted by 1 to 3 alkyl groups with 1 to 8 carbon atoms in each alkyl group,

$R^5$ is halogen, –XH or $-XR^6$,

X is O or S,

$R^6$ is phenyl, substituted by alkyl, having the formula

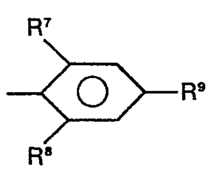

$R^7$ is hydrogen, branched alkyl of 3 to 18 carbon atoms, benzyl, α-methylbenzyl or α,α-dimethylbenzyl,

$R^8$ is hydrogen, alkyl of 1 to 18 carbon atoms, benzyl, α-methylbenzyl or α,α-dimethylbenzyl, and

$R^9$ is hydrogen, alkyl of 1 to 18 carbon atoms, carbalkoxy of 2 to 19 carbon atoms, carboalkoxyalkyl of 3 to 24 carbon atoms, carbophenoxy, carbophenoxyalkyl of 8 to 16 carbon atoms, or carbophenoxy or carbophenoxyalkyl with the phenoxy substituted with 1 to 3 alkyl groups with 1 to 8 carbon atoms in each alkyl group.

2. A compound according to claim 1, wherein

$R^1$ is branched alkyl of 4 to 12 carbon atoms, α-methylbenzyl or α,α-dimethylbenzyl,

$R^2$ is alkyl of 3 to 12 carbon atoms, α-methylbenzyl or α,α-dimethylbenzyl,

$R^3$ is hydrogen, alkyl of 1 to 18 carbon atoms, carboalkoxy of 2 to 19 carbon atoms, carboalkoxyalkyl of 3 to 21 carbon atoms or carbophenoxy with the phenoxy substituted with 1 to 3 alkyl groups with 1 to 8 carbon atoms in each alkyl group,

$R^4$ is alkyl of 1 to 18 carbon atoms, phenyl or phenyl substituted by 1 to 3 alkyl groups with 1 to 8 carbon atoms in each alkyl group,

$R^5$ is chlorine or $-XR^6$, wherein $R^6$ is as defined in claim 1,

X is O,

$R^7$ is hydrogen, branched alkyl of 4 to 12 carbon atoms, α-methylbenzyl or α,α-dimethylbenzyl,

$R^8$ is hydrogen, alkyl of 1 to 12 carbon atoms, α-methylbenzyl or α,α-dimethylbenzyl, and

$R^9$ is hydrogen, alkyl of 1 to 18 carbon atoms, carboalkoxy of 2 to 19 carbon atoms, carboalkoxyalkyl of 3 to 21 carbon atoms or carbophenoxy with the phenoxy substituted with 1 to 3 alkyl groups with 1 to 8 carbon atoms in each alkyl group,

with the proviso that all of $R^7$, $R^8$ and $R^9$ cannot be hydrogen at the same time.

3. A compound according to claim 1, wherein

$R^1$ is tertiary alkyl of 4 to 8 carbon atoms,

$R^2$ is branched alkyl of 4 to 8 carbon atoms,

$R^3$ is hydrogen, alkyl of 1 to 9 carbon atoms, carboalkoxy of 2 to 9 carbon atoms, carboalkoxyalkyl of 3 to 11 carbon atoms or carbophenoxy with the phenoxy substituted with 1 to 3 alkyl groups with 1 to 4 carbon atoms in each alkyl group,

$R^4$ is phenyl or phenyl substituted by 1 to 3 alkyl groups with 1 to 4 carbon atoms in each alkyl group,

$R^5$ is chlorine or $-XR^6$, wherein $R^6$ is as defined in claim 1,

X is O,

$R^7$ is tertiary alkyl of 4 to 8 carbon atoms,

$R^8$ is hydrogen or alkyl of 1 to 8 carbon atoms, and

$R^9$ is hydrogen, alkyl of 1 to 9 carbon atoms, carboalkoxy of 2 to 9 carbon atoms, carboalkoxyalkyl of 3 to 11 carbon atoms or carbophenoxy with the phenoxy substituted with 1 to 3 alkyl groups with 1 to 4 carbon atoms in each alkyl group.

4. A compound according to claim 1, wherein

$R^1$ is isopropyl or tert-butyl,

$R^2$ is alkyl of 1 to 4 carbon atoms,

$R^3$ is hydrogen, alkyl of 1 to 18 carbon atoms, $-CH_2CH_2COOCH_3$, $-COOCH_3$, $-CCOOC_{18}H_{37}$ or

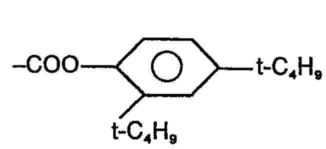

$R^4$ is alkyl of 1 to 18 carbon atoms or phenyl,

$R^5$ is chlorine, –XH or $XR^6$,

X is O,

$R^6$ is

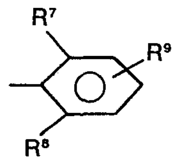

$R^7$ is hydrogen, isopropyl or tert-butyl,

$R^8$ is hydrogen or alkyl of 1 to 4 carbon atoms, and

$R^9$ is alkyl of 1 to 4 carbon atoms, $-COOCH_3$, $-CH_2CH_2COOCH_3$ or

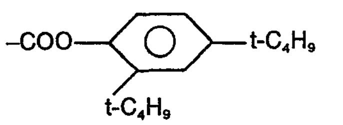

with the proviso that both $R^7$ and $R^8$ cannot be hydrogen at the same time.

5. The compound according to claim 1 which is O-(2,6-di-tert-butyl-4-methylphenyl)-O'-(2,4-di-tert-butyl-phenyl) phenylphosphonite.

6. The compound according to claim 1 which is O-(2,4-di-tert-butylphenyl)-O'-(2,4,6-tri-tert-butylphenyl) phenylphosphonite.

7. The compound according to claim 1 which is O-[2,6-di-tert-butyl-4-(2-carbomethoxyethyl) phenyl]-O'-(4-tert-butylphenyl) phenylphosphonite.

8. The compound according to claim 1 which is O-(2,6-di-tert-butyl-4-methylphenyl)-O'-(4-tert-butylphenyl) phenylphosphonite.

9. The compound according to claim 1 which is O,O'-bis(2,6-di-tert-butyl-4-carbomethoxyphenyl) phenylphosphonite.

10. The compound according to claim 1 which is O,O'-bis[2,6-di-tert-butyl-4-(carbo-2,4-di-tert-butylphenoxy)-phenyl] phenylphosphonite.

11. A composition of matter comprising an organic material subject to oxidative, thermal or actinic degradation stabilized with from 0.01 to 5% by weight of a compound according to claim 1.

12. A composition according to claim 11 wherein the organic material is a synthetic polymer.

13. A composition according to claim 12 wherein the polymer is a polyolefin homopolymer or copolymer.

14. A composition according to claim 13 stabilized with
O-(2,6-di-tert-butyl-4-methylphenyl)-O'-(2,4-di-tert-butylphenyl) phenylphosphonite,
O-(2,4-di-tert-butylphenyl)-O'-(2,4-tri-tert-butylphenyl) phenylphosphonite or
O,O'-bis[2,6-di-tert-butyl-4-(carbo-2,4-di-tert-butylphenoxy)phenyl] phenylphosphonite.

15. A compound of the formula

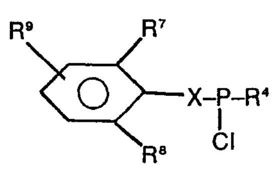

wherein

$R^4$ is alkyl of 1 to 18 carbon atoms, phenyl or phenyl substituted by 1 to 3 alkyl groups with 1 to 8 carbon atoms in each alkyl group,

X is O or S,

$R^7$ is hydrogen, branched alkyl of 3 to 18 carbon atoms, benzyl, α-methylbenzyl or α,α-dimethylbenzyl,

$R^8$ is hydrogen, alkyl of 1 to 18 carbon atoms, benzyl, α-methylbenzyl or α,α-dimethylbenzyl, and

$R^9$ is hydrogen, alkyl of 1 to 18 carbon atoms, carboalkoxy of 2 to 19 carbon atoms, carboalkoxyalkyl of 3 to 24 carbon atoms, carbophenoxy, carbophenoxyalkyl of 8 to 16 carbon atoms; or carbophenoxy or carbophenoxyalkyl with the phenoxy substituted with 1 to 3 alkyl groups with 1 to 8 carbon atoms in each alkyl group,

with the proviso that all of $R^7$, $R^8$ and $R^9$ cannot be hydrogen at the same time.

16. A compound according to claim 15, wherein

$R^4$ is alkyl of 1 to 8 carbon atoms, phenyl or phenyl substituted by 1 to 3 alkyl groups with 1 to 8 carbon atoms in each alkyl group,

X is O,

$R^7$ is hydrogen, branched alkyl of 4 to 12 carbon atoms, α-methylbenzyl or α,α-dimethylbenzyl,

$R^8$ is hydrogen, alkyl of 1 to 12 carbon atoms, α-methylbenzyl or α,α-dimethylbenzyl, and

$R^9$ is hydrogen, alkyl of 1 to 18 carbon atoms, carboalkoxy of 2 to 19 carbon atoms, carboalkoxyalkyl of 3 to 21 carbon atoms or carboxyphenoxy with the phenoxy substituted with 1 to 3 alkyl groups with 1 to 8 carbon atoms in each alkyl groups,

with the proviso that all of $R^7$, $R^8$ and $R^9$cannot be hydrogen at the same time.

17. A compound according to claim 15, wherein

$R^4$ is phenyl or phenyl substituted by 1 to 3 alkyl groups with 1 to 4 carbon atoms in each alkyl group,

X is O,

$R^7$ is tertiary alkyl of 4 to 8 carbon atoms,

$R^8$ is hydrogen or alkyl of 1 to 8 carbon atoms, and

$R^9$ is hydrogen, alkyl of 1 to 9 carbon atoms, carboalkoxy of 2 to 9 carbon atoms, carboalkoxyalkyl of 3 to 11 carbon atoms, or carbophenoxy with the phenoxy substituted with 1 to 3 alkyl groups with 1 to 3 alkyl groups with 1 to 4 carbon atoms in each alkyl group.

18. The compound according to claim 15 which is
O-(2,4-di-tert-butylphenyl) phenylphosphonochloridite.

19. The compound according to claim 1 which is O,O'-bis(2,6-di-tert-butyl-4-methylphenyl) phenylphosphonite.

20. The compound according to claim 1 which is O,O'-bis(2,4,6-tri-tert-butylphenyl) phenylphosphonite.

**Revendications**

1. Composés répondant à la formule:

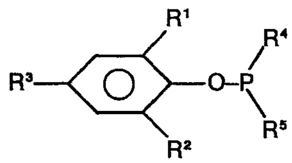

dans laquelle $R^1$ représente un alkyle ramifié contenant de 3 à 18 atomes de carbone, un benzyle, un α-méthylbenzyle ou un α,α-diméthylbenzyle, $R^2$ un alkyle contenant de 1 à 18 atomes de carbone, un benzyle, un α-méthylbenzyle ou un α,α-diméthylbenzyle, $R^3$ l'hydrogène, un alkyle contenant de 1 à 18 atomes de carbone, un alcoxycarbonyle contenant de 2 à 19 atomes de carbone, un alcoxycarbonyl-alkyle contenant de 3 à 24 atomes de carbone, un phénoxycarbonyle, un phénoxycarbonyl-alkyle contenant de 8 à 16 atomes de carbone, ou un phénoxycarbonyle ou phénoxycarbonyl-alkyle contenant, dans la partie phénoxy, de 1 à 3 radicaux alkyles contenant chacun de 1 à 8 atomes de carbone, $R^4$ un alkyle contenant de 1 à 18 atomes de carbone ou un phényle éventuellement porteur de 1 à 3 radicaux alkyles contenant chacun de 1 à 8 atomes de carbone, $R^5$ un halogène, un groupe –XH ou un groupe –$XR^6$, groupes dans lesquels X représente O ou S et $R^6$ un phényle alkylé répondant à la formule:

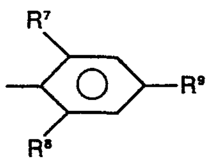

dans laquelle $R^7$ représente l'hydrogène, un alkyle ramifié contenant de 3 à 18 atomes de carbone, un benzyle, un α-méthylbenzyle ou un α,α-diméthylbenzyle, $R^8$ l'hydrogène, un alkyle contenant de 1 à 18 atomes de carbone, un benzyle, un α-méthylbenzyle ou un α,α-diméthylbenzyle, et $R^9$ l'hydrogène, un alkyle contenant de 1 à 18 atomes de carbone, un alcoxycarbonyle contenant de 2 à 19 atomes de carbone, un alcoxycarbonyl-alkyle contenant de 3 à 24 atomes de carbone, un phénoxycarbonyle, un phénoxycarbonyl-alkyle contenant de 8 à 16 atomes de carbone, ou un phénoxycarbonyle ou phénoxycarbonyl-alkyle contenant, dans sa partie phénoxy, de 1 à 3 alkyles contenant chacun de 1 á 8 atomes de carbone.

2. Composés selon la revendication 1, caractérisés en ce que $R^1$ représente un alkyle ramifié contenant de 4 à 12 atomes de carbone, un α-méthylbenzyle ou un α,α-diméthylbenzyle, $R^2$ un alkyle contenant de 3 à 12 atomes de carbone, un α-méthylbenzyle ou un α,α-diméthylbenzyle, $R^3$ l'hydrogène, un alkyle contenant de 1 à 18 atomes de carbone, un alcoxycarbonyle contenant de 2 à 19 atomes de carbone, un alcoxycarbonyl-alkyle contenant de 3 à 21 atomes de carbone, ou un phénoxycarbonyle portant, sur sa partie phénoxy, de 1 à 3 alkyles contenant chacun de 1 à 8 atomes de carbone, $R^4$ représente un alkyle contenant de 1 à 18 atomes de carbone ou un phényle portant éventuellement de 1 à 3 alkyles contenant chacun de 1 à 8 atomes de carbone, $R^5$ le chlore ou un groupe –$XR^6$ dans lequel $R^6$ a la signification donnée à la revendication 1, X représente O, $R^7$ représente l'hydrogène, un alkyle ramifié contenant de 4 à 12 atomes de carbone, un α-méthylbenzyle ou un α,α-diméthylbenzyle, $R^8$ représente l'hydrogène, un alkyle contenant de 1 à 12 atomes de carbone, un α-méthylbenzyle ou un α,α-diméthylbenzyle, et $R^9$ représente l'hydrogène, un alkyle contenant de 1 à 18 atomes de carbone, un alcoxycarbonyle contenant de 2 à 19 atomes de carbone, un alcoxycarbonyl-alkyle contenant de 3 à 21 atomes de carbone, ou un phénoxycarbonyle portant, sur sa partie phénoxy, de 1 à 3 alkyles contenant chacun de 1 à 8 atomes de carbone, avec la condition que $R^7$, $R^8$ et $R^9$ ne représentent pas tous, en même temps, chacun l'hydrogène.

3. Composés suivant la revendication 1, caractérisés en ce que $R^1$ représente un alkyle tertiare contenant de 4 à 8 atomes de carbone, $R^2$ un alkyle ramifié contenant de 4 à 8 atomes de carbone, $R^3$ l'hydrogène, un alkyle contenant de 1 à 9 atomes de carbone, un alcoxycarbonyle contenant de 2 à 9 atomes de carbone, un alcoxycarbonyl-alkyle contenant de 3 à 11 atomes de carbone, ou un phénoxycarbonyle portant, sur sa partie phénoxy, de 1 à 3 alkyles contenant chacun de 1 à 4 atomes de carbone, $R^4$ représente un phényle éventuellement porteur de 1 à 3 alkyles contenant chacun de 1 à 4 atomes de carbone, $R^5$ représente le chlore ou un groupe –$XR^6$ dans lequel $R^6$ a la signification donnée à la revendication 1, X représente O, $R^7$ un alkyle tertiaire contenant de 4 à 8 atomes de carbone, $R^8$ l'hydrogène ou un alkyle contenant de 1 à 8 atomes de carbone, et $R^9$ l'hydrogène, un alkyle contenant de 1 à 9 atomes de carbone, un alcoxycarbonyle contenant de 2 à 9 atomes de carbone, un alcoxycarbonyl-alkyle contenant de 3 à 11 atomes de carbone, ou un phénoxycarbonyle portant, sur sa partie phénoxy, de 1 à 3 alkyles contenant chacun de 1 à 4 atomes de carbone.

4. Composés selon la revendication 1, caractérisés en ce que $R^1$ représente un isopropyle ou un tert-butyle, $R^2$ un alkyle contenant de 1 à 4 atomes de carbone, $R^3$ l'hydrogène, un alkyle contenant de 1 à 18 atomes de carbone, $-CH_2CH_2COOCH_3$, $-COOCH_3$, $-COOC_{18}H_{37}$ ou

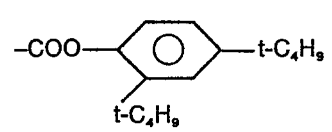

$R^4$ un alkyle contenant de 1 à 18 atomes de carbone ou un phényle, $R^5$ le chlore, un groupe –XH ou un groupe –$XR^6$ dans lequel X représente O, $R^6$ représente un radical de formule:

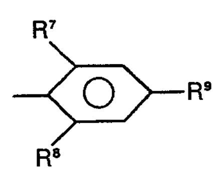

$R^7$ représente l'hydrogène, un isopropyle ou un tert-butyle, $R^8$ l'hydrogène ou un alkyle contenant de 1 à 4 atomes de carbone, et $R^9$ un alkyle contenant de 1 à 4 atomes de carbone, $-COOCH_3$, $-CH_2CH_2COOCH_3$ ou

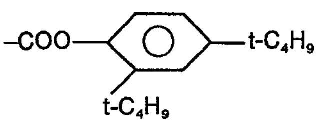

avec la condition que $R^7$ et $R^8$ ne représentent pas, chacun, en même temps, l'hydrogène.

5. Composé selon la revendication 1, en l'espèce le phénylphosphonite d'O-(di-tert-butyl-2,6-méthyl-4-phényle) et d'O'-(di-tert-butyl-2,4-phényle).

6. Composé selon la revendication 1, en l'espèce le phénylphosphonite d'O-(di-tert.-butyl-2,4-phényle) et d'O'-(tri-tert-butyl-2,4-6-phényle).

7. Composé selon la revendication 1, en l'espèce le phénylphosphonite d'O-[di-tert-butyl-2,6-(méthoxycarbonyl-2-éthyl-4-phényle] et d'O'-(tert-butyl-4-phényle).

8. Composé selon la revendication 1, en l'espèce le phénylphosphonite d'O-(di-tert-butyl-2,6-méthyl-4-phényle) et d'O'-(tert-butyl-4-phényle).

9. Composé selon la revendication 1, en l'espèce le phénylphosphonite d'O,O'-bis-[di-tert-butyl-2,6-(méthoxycarbonyl)-4-phényle].

10. Composé selon la revendication 1, en l'espèce le phénylphosphonite d'O,O'-bis-[di-tert-butyl-2,6-(di-tert-butyl-2,4-phénoxycarbonyl)-4-phényle].

11. Compositions constituées d'une matière organique risquant de subir une dégradation sous l'effet de l'oxydation, de la chaleur ou d'un rayonnement actinique, compositions caractérisées en ce qu'elles sont stabilisées par 0,01 à 5% en poids d'un composé selon la revendication 1.

12. Compositions suivant la revendication 11, caractérisées en ce qu'elles comportent comme matière organique un polymère synthétique.

13. Compositions selon la revendication 12, caractérisées en ce qu'elles comportent, comme polymère, une polyoléfine homopolymère ou un copolymère d'oléfines.

14. Compositions selon la revendication 13, caractérisées en ce qu'elles sont stabilisées par le phénylphosphonite d'O-(di-tert-butyl-2,6-méthyl-4-phényle) et d'O'-(di-tert-butyl-2,4-phényle), le phénylphosphonite d'O-(di-tert-butyl-2,4-phényle) et d'O'-(tri-tert-butyl-2,4,6-phényle) ou le phénylphosphonite d'O,O'-bis-[di-tert-butyl-2,6-(di-tert-butyl-2,4-phénoxycarbonyl)-4-phényle].

15. Composés répondant à la formule:

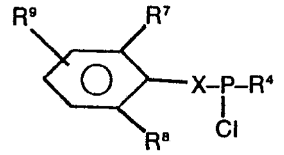

dans laquelle $R^4$ représente un alkyle contenant de 1 à 18 atomes de carbone ou un phényle éventuellement porteur d'1 à 3 alkyles contenant chacun de 1 à 8 atomes de carbone, X représente O ou S, $R^7$ représente l'hydrogène, un alkyle ramifié contenant de 3 à 18 atomes de carbone, un benzyle, un α-méthylbenzyle ou un α,α-diméthylbenzyle, $R^8$ l'hydrogène, un alkyle en $C_1$–$C_{18}$, un benzyle, un α-méthylbenzyle ou un α,α-diméthylbenzyle, et $R^9$ l'hydrogène, un alkyle contenant de 1 à 18 atomes de carbone, un alcoxycarbonyle contenant de 2 à 19 atomes de carbone, un alcoxycarbonyl-alkyle contenant de 3 à 24 atomes de carbone, un phénoxycarbonyle, un phénoxycarbonyl-alkyle contenant de 8 à 16 atomes de carbone, ou un phénoxycarbonyle ou phénoxycarbonyl-alkyle portant, sur la partie phénoxy, de 1 à 3 alkyles contenant chacun de 1 à 8 atomes de carbone, avec la condition que $R^7$, $R^8$ et $R^9$ ne représentent pas en même temps chacun l'hydrogène.

16. Composés suivant la revendication 15, caractérisés en ce que $R^4$ représente un alkyle contenant de 1 à 8 atomes de carbone ou un phényle éventuellement porteur de 1 à 3 alkyles contenant chacun de 1 à 8 atomes de carbone, X représente O, $R^7$ représente l'hydrogène, un alkyle ramifié contenant de 4 à 12 atomes de carbone, un α-méthylbenzyle ou un α,α-diméthylbenzyle, $R^8$ l'hydrogène, un alkyle contenant de 1 à 12 atomes de carbone, un α-méthylbenzyle ou un α,α-diméthylbenzyle, et $R^9$ l'hydrogène, un alkyle contenant de 1 à 18 atomes de carbone, un alcoxycarbonyle contenant de 2 à 19 atomes de carbone, un alcoxycarbonyl-alkyle contenant de 3 à 21 atomes de carbone, ou un phénoxycarbonyle portant, sur sa partie phénoxy, de 1 à 3 alkyles contenant chacun de 1 à 8 atomes de carbone, avec la condition que $R^7$, $R^8$ et $R^9$ ne représentent en même temps chacun l'hydrogène.

17. Composés selon la revendication 15, caractérisés en ce que $R^4$ représente un phényle éventuellement porteur de 1 à 3 alkyles contenant chacun de 1 à 4 atomes de carbone, X représente O, $R^7$ représente un alkyle tertiaire contenant de 4 à 8 atomes de carbone, $R^8$ l'hydrogène ou un alkyle contenant de 1 à 8 atomes de carbone, et $R^9$ l'hydrogène, un alkyle contenant de 1 à 9 atomes de carbone, un alcoxycarbonyle contenant de 2 à 9 atomes de carbone, un alcoxycarbonyl-alkyle contenant de 3 à 11 atomes de carbone, ou un phénoxycarbonyle portant, sur sa partie phénoxy, de 1 à 3 alkyles contenant chacun de 1 à 4 atomes de carbone.

18. Composé selon la revendication 15, en l'espèce le phénylphosphonochloridite d'O-(di-tert-butyl-2,4-phényle).

19. Composé selon la revendication 1, en l'espèce le phénylphosphonite d'O,O'-bis-(di-tert-butyl-2,6-méthyl-4-phényle).

20. Composé selon la revendication 1, en l'espèce le phénylphosphonite d'O,O'-bis-(tri-tert-butyl-2,4,6-phényle).